(19) Europäisches Patentamt / European Patent Office / Office européen des brevets

(11) **EP 1 745 464 B1**

(12) **EUROPÄISCHE PATENTSCHRIFT**

(45) Veröffentlichungstag und Bekanntmachung des Hinweises auf die Patenterteilung:
**10.10.2007 Patentblatt 2007/41**

(21) Anmeldenummer: 05745748.3

(22) Anmeldetag: **09.05.2005**

(51) Int Cl.:
**G10L 11/00** *(2006.01)*

(86) Internationale Anmeldenummer:
**PCT/EP2005/005004**

(87) Internationale Veröffentlichungsnummer:
**WO 2005/111998 (24.11.2005 Gazette 2005/47)**

(54) **VORRICHTUNG UND VERFAHREN ZUM ANALYSIEREN EINES INFORMATIONSSIGNALS**

DEVICE AND METHOD FOR ANALYZING AN INFORMATION SIGNAL

DISPOSITIF ET PROCEDE POUR ANALYSER UN SIGNAL D'INFORMATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **10.05.2004 DE 102004023436**

(43) Veröffentlichungstag der Anmeldung:
**24.01.2007 Patentblatt 2007/04**

(73) Patentinhaber: **m2any GmbH**
**85748 Garching (DE)**

(72) Erfinder:
- **HERRE, Jürgen**
  **91054 Buckenhof (DE)**
- **ALLAMANCHE, Eric**
  **Emeryville, CA 94608 (US)**
- **HELLMUTH, Oliver**
  **91052 Erlangen (DE)**
- **KASTNER, Thorsten**
  **96342 Stockheim (DE)**

(74) Vertreter: **Schoppe, Fritz et al**
**Schoppe, Zimmermann, Stöckeler & Zinkler**
**Patentanwälte**
**Postfach 246**
**82043 Pullach bei München (DE)**

(56) Entgegenhaltungen:
**WO-A-02/11123**

- **BATLLE E ET AL: "Automatic song identification in noisy broadcast audio" PROCEEDINGS OF THE FOURTH IASTED INTERNATIONAL CONFERENCE SIGNAL AND IMAGE PROCESSING ACTA PRESS ANAHEIM, CA, USA, 2002, Seiten 230-235, XP002337265 ISBN: 0-88986-340-7**
- **CHAI ET AL.: "Folk Music Classification Using Hidden Markov Models" PROCEEDINGS OF INTERNATIONAL CONFERENCE ON ARTIFICIAL INTELLIGENCE, [Online] Juni 2001 (2001-06), Seiten 1-6, XP002337266 Las Vegas (USA) Gefunden im Internet: URL:http: //web.media.mit.edu/~chaiwei/pape rs/chai_ ICAI183.pdf> [gefunden am 2005-07-21]**

**Beschreibung**

Die vorliegende Erfindung bezieht sich auf die Signalanalyse und insbesondere auf die Signalanalyse zu Zwecken der Identifikation eines Signalinhalts.

Um die immer größer werdenden Bestände an Audio- und VideoMaterial zu archivieren, leicht durchsuchbare Datenbanken zu erstellen oder über verschiedene Vertriebswege zu verteilen, werden automatische Informationserkennungssysteme benötigt, die helfen, Audio- und Videomaterial oder allgemein gesagt Informationsmaterial eindeutig, basierend auf dem Inhalt, zu identifizieren.

Eine Anwendung hierfür ist das sogenannte "Broadcast-Monitoring" bzw. die Rundfunküberwachung. Mit Hilfe eines solchen Audio-Video-Überwachungssystems soll z. B. sichergestellt werden, daß nur rechtmäßige Inhalte verbreitet werden oder daß die jeweiligen Tantiemen für die Rechte-Inhaber des Audio- und Video-Materials korrekt abgerechnet werden.

Eine weitere Anwendung ist z. B. die Erkennung von Audiomaterial, welches über Peer-to-Peer-Netzwerke zwischen Partnern ausgetauscht werden soll.

Eine weitere Anwendung ist die Kontrollmöglichkeit der Werbeindustrie, um einen Fernseh- oder Radiosender dahingehend zu kontrollieren, ob die gebuchten Werbezeiten auch tatsächlich ausgestrahlt worden sind, oder ob nur Teile der gebuchten Werbeanteile ausgesendet worden sind, oder ob Teile der Werbesendungen während der Übertragung gestört worden sind, was z. B. in die Verantwortung des Fernseh- oder Rundfunk-Senders fallen könnte. An dieser Stelle sei darauf hingewiesen, daß insbesondere die Kosten für die Fernsehwerbung in weit verbreiteten Programmen zu guten Sendezeiten derart hoch sind, daß die Werbeindustrie insbesondere im Hinblick auf diese hohen Kosten ein vitales Interesse an einer Kontrollmöglichkeit hat, um nicht nur auf die Angaben der Rundfunksender vertrauen zu müssen. Bisher wird als Kontrollmöglichkeit auf bezahlte "Probehörer" bzw. "Probehörerinnen" oder "Probeseher" bzw. "Probeseherinnen" gesetzt, die ein bestimmtes Fernsehprogramm durchgehend betrachten und z. B. die genauen Zeiten protokollieren, zu denen ein Werbespot übertragen wird und die ferner überwachen, ob während der Übertragung keine Störung aufgetreten ist, oder ob der gesamte Werbespot korrekt übertragen worden ist, ob also keine Bildverzerrung stattgefunden hat, etc.

Die Nachteile dieses Konzepts sind evident. So sind zum einen die Kosten erheblich, und ist zum anderen die Verläßlichkeit oder Beweiskraft von Aussagen der Probehörer bzw. Probeseher problematisch, insbesondere wenn Rückzahlungsforderungen in beträchtlicher Höhe erhoben werden, welche im Hinblick auf ihre Nachweisbarkeit allein an Probebeobachtern bzw. Probebeobachterinnen hängt.

Zum automatisierten Broadcast-Monitoring können verschiedene bekannte Systeme eingesetzt werden. So offenbart die WO 02/11123 A2 oder die Fachveröffentlichung: "Invited Talk: An Industrial-Strength Audio Search Algorithm", Avery Wang,

ISMIR 2003, Baltimore, Oktober 2003, Systeme und Verfahren zum Erkennen von Ton- und Musiksignalen in einer Umgebung starken Rauschens und hoher Verzerrungen. Hierbei wird zunächst untersucht, ob eine Übereinstimmung zwischen Hash-Werten eines Referenz-Audio-Objekts und dem aktuell ermittelten Hash-Wert des noch unidentifizierten Audio-Objekts vorliegt. Ist dies der Fall, so wird der zugehörige Zeitoffset, also der relative Abstand vom Beginn des Audio-Objekts, des Hash-Werts in dem noch unidentifizierten Audio-Objekt und der Zeitoffset des Hash-Werts in dem Referenz-Audio-Objekt unter der jeweiligen Kennung des Referenz-Audio-Objekts gespeichert. Sind alle Eingangshashwerte verarbeitet, dann beginnt eine sogenannten Scanning-Phase. In dieser wird untersucht, wie viele Zeitoffsetpaare pro Referenz-Audio-Objektzeit kontinuierlich zusammenpassen. Wird eine bestimmte Anzahl festgestellt, so geht man von einer Identifizierung des entsprechenden Referenz-Audio-Objekts aus. Die Zeitoffsetpaare werden genau dann als zeitkontinuierlich, d. h. zeitlich zueinander gehörig, angesehen, wenn sie in einem zweidimensionalen Scatterplot mit einem Zeitoffset als x- und dem anderen als y-Koordinate eine Gerade bilden.

Eine weitere bekannte Vorrichtung zur automatischen Identifikation von Musikstücken wird in der Veröffentlichung BATLLE E ET AL: "Automatic Song Identification in Noisy Broadcast Audio" PROCEEDINGS OF THE FOURTH IASTED INTERNATIONAL CONFERENCE SIGNAL AND IMAGE PROCESSING ACTA PRESS ANAHEIM (USA), 2002, Seiten 230-235, XP002337265 offenbart.

In der Fachveröffentlichung "Robust Audio Hashing for Content Identification" von J. Haitsma, T. Kalker, J. Oostveen, in den Proceedings of the Content-Based Multimedia Indexing, 2001, url:citeseer.ist.psu.edu/haitsma01robust.html, wird ein System zum robusten Audio-Hashing für eine Inhaltsidentifikation dargestellt. Zur inhaltsbasierten Musikerkennung wird eine Hash-Funktion eingesetzt, welche eine Bitfolge mit einem Abschnitt aus einem Audiosignal assoziiert, und zwar in einer Form, daß für die menschliche Schallwahrnehmung akustisch ähnliche Audiosignale auch eine ähnliche Bitfolge erzeugen. Zur Berechnung eines Hash-Werts wird zunächst das Audiosignal gefenstert und einer Transformation unterzogen, um schließlich eine Einteilung des Transformationsergebnisses in Frequenzbänder mit logarithmischer Bandbreite vorzunehmen. Für diese Frequenzbänder werden die Vorzeichen der Differenzen in Zeit- und Frequenzrichtung bestimmt. Die sich aus den Vorzeichen ergebende Bitfolge bildet den Hash-Wert. Es wird immer ein Hash-Wert für eine Audiosignallänge von 3 Sekunden berechnet. Liegt für einen solchen Abschnitt die Hamming-Distanz zwischen einem Referenz-Hash-Wert und einem zu untersuchenden Test-Hash-Wert unterhalb einer Schwelle s, so wird eine Übereinstimmung angenommen und der Testabschnitt dem Referenzelement zugeordnet.

Um eine Erkennung von Audiomaterial durchzuführen, wird das Audiosignal typischerweise in kleine Einheiten der Länge Δt zerlegt. Diese einzelnen Einheiten werden jeweils einzeln analysiert, um wenigstens eine gewisse zeitliche Auflösung zu haben.

Hieraus ergeben sich mehrere Probleme.

Die Erkennungsergebnisse der kleinen analysierten Zeitabschnitte des Audiosignals müssen so zusammengesetzt werden, daß für einen längeren Zeitabschnitt eine eindeutige, korrekte Aussage über das erkannte Audiosignal getroffen werden kann.

Zur Analyse eines kontinuierlichen Audiodatenstroms sollen Übergänge von einem Audioelement zu einem anderen richtig erkannt werden, d. h. ein Wechsel von einem Musikstück A zu einem Musikstück B.

Ferner existiert die Situation, bei der von einem Musikstück mehrere Versionen vorkommen, die z. B. gleich beginnen und sich erst nach einer gewissen Zeit anfangen zu unterscheiden. Hierbei sei beispielsweise an Kurzversionen oder Maxiversionen eines Songs gedacht. Alternativ existieren auch Situationen dahingehend, daß Musikstücke, die auf den gleichen Song zurückgehen, z. B. am Anfang unterschiedlich sind, einen identischen Mittelteil haben und sich gegen Ende wenigstens eines der beiden Musikstücke voneinander wieder unterscheiden. Für die Tantiemenvergabe an Urheberrecht-Inhaber kann es durchaus eine Rolle spielen, ob z. B. gegen eine höhere Gebühr die Maxiversion eines Songs gespielt werden kann, ob für eine mittlere Gebühr nur eine Normalversion gespielt werden darf, oder ob für eine geringe Gebühr bereits die Kurzversion eines Songs gespielt werden kann. In diesem Fall sollten verschiedene Versionen eines Songs zuverlässig voneinander unterschieden werden können.

Der vorstehende Stand der Technik ist dahingehend unzureichend, daß sich Erfassungsfehler ergeben, wenn die Ergebnisse der Einzelerkennungen einfach zusammengesetzt werden. Insbesondere werden keine Angaben dahingehend geliefert, ob und wie ein kontinuierlicher Audiodatenstrom aus mehreren verschiedenen Audioobjekten analysiert werden kann und wie entsprechende Wechsel zwischen verschiedenen Audioobjekten detektiert werden können. Des weiteren wird insbesondere im letztgenannten Stand der Technik die Vieldeutigkeit von Referenz-Hash-Werten zwar erwähnt. Es wird jedoch keine explizite Lösung für das Problem zur Bestimmung eines eindeutigen Kandidaten genannt. Gilt für einen Hash-Wert ein Audioobjekt als identifiziert, so wird für den unmittelbar folgenden Hash-Wert lediglich geprüft, ob dieser zu dem identifizierten Audioobjekt paßt. Ist dies nicht der Fall, so wird neu gesucht, unter Einbeziehung von allen Referenzaudioobjekten.

Insbesondere zur Unterscheidung von unterschiedlichen Versionen ein und desselben Songs ist im Stand der Technik keine Lösung bekannt.

Die Aufgabe der vorliegenden Erfindung besteht darin, ein zuverlässiges Konzept zum Analysieren eines Informationssignals zu schaffen.

Diese Aufgabe wird durch eine Vorrichtung zum Analysieren eines Informationssignals gemäß Patentanspruch 1, ein Verfahren zum Analysieren eines Informationssignals gemäß Patentanspruch 20 oder ein Computer-Programm gemäß Patentanspruch 21 gelöst.

Der vorliegenden Erfindung liegt die Erkenntnis zugrunde, daß eine zuverlässige Inhaltsidentifikation dadurch erreicht wird, daß nicht nur Einzelerkennungsergebnisse für sich betrachtet berücksichtigt werden, sondern über einen gewissen Zeitraum hinweg. So existiert auch in der Folge von Einzelerkennungsergebnissen für eine Folge von Fingerabdrücken eine erhebliche Information, die zur Erkennung einsetzbar ist. Erfindungsgemäß wird daher aus einer Folge von Fingerabdrücken, die eine Folge von Blöcken eines Informationssignals darstellt, eine Bildung von wenigstens zwei unterschiedlichen Hypothesen durchgeführt, wobei eine erste Hypothese eine Annahme für die Zugehörigkeit der Folge von Blöcken zu einer ersten Informationsentität ist, und wobei die zweite Hypothese eine Annahme für die Zugehörigkeit der Folge von Blöcken zu der zweiten Informationsentität ist. Die wenigstens zwei Hypothesen werden nunmehr untersucht und einer Bewertung dahingehend unterzogen, daß eine Aussage über das Informationssignal basierend auf einem Untersuchungsergebnis getroffen wird. Die Aussage könnte beispielsweise darin bestehen, daß bestimmt wird, daß die Folge von Blöcken eine Informationsentität darstellt, die eine Hypothese hat, die am wahrscheinlichsten ist. Die Aussage könnte alternativ oder zusätzlich darin bestehen, daß eine Informationseinheit mit dem Fingerabdruck beendet ist, der als zeitlich letzter Fingerabdruck aus der Folge von Fingerabdrücken zu der wahrscheinlichsten Hypothese beiträgt.

Vorzugsweise werden die Hypothesen dahingehend untersucht, daß es für Fingerabdrücke wenigstens zwei unterschiedliche Identifikationsergebnisse gibt, sowie daß es für jeden der zwei unterschiedlichen Identifikationsergebnisse ein Zuverlässigkeitsmaß gibt, wobei dieses Zuverlässigkeitsmaß in einer konkreten Zahl bestehen kann. Dieses Zuverlässigkeitsmaß kann jedoch auch implizit dahingehend gegeben sein, daß allein die Tatsache, daß z. B. zwei Identifikationsergebnisse geliefert werden, eine Zuverlässigkeit von z. B. 1/2 signalisiert wird und daß diese Zahl nicht explizit angegeben wird.

Zur Beurteilung, ob eine Hypothese wahrscheinlicher ist als die andere Hypothese werden vorzugsweise Zuverlässigkeitsmaße der Einzelerkennungen für die betreffende Anzahl von zeitlich aufeinanderfolgenden Blöcken zusammengefaßt, wobei diese Zusammenfassung vorzugsweise in einer Aufaddition bestehen wird. Hierauf wird die Hypothese, die das höchste zusammengefaßte Zuverlässigkeitsmaß liefert, als die wahrscheinlichste Hypothese bewertet.

Bei einem bevorzugten Ausführungsbeispiel der vorliegenden Erfindung wird als Mittel zum Bereitstellen von aufeinanderfolgenden Identifikationsergebnissen eine Fingerabdruck-Datenbank verwendet, in der eine Anzahl von ReferenzFingerabdrücken jeweils in Zuordnung zu einem Identifikationsergebnis abgelegt sind. Hierauf wird mit dem aus einem Block des zu analysierenden Informationssignals erzeugten Fingerabdrucks eine Datenbanksuche vorgenommen, um innerhalb der Datenbank nach einem Referenzfingerabdruck zu suchen, der eine Übereinstimmung mit dem Test-Fingerabdruck liefert. Je nach Ausgestaltung der Datenbank wird als Suchergebnis nur der beste Treffer, also der Treffer mit einem minimalen Abstandsmaß von der Datenbank als Identifikationsergebnis ausgegeben. Es werden auch Datenbanken bevorzugt, die nicht nur qualitativ ein Trefferergebnis liefern, sondern auch ein quantitatives Trefferergebnis liefern, dahingehend, daß eine Anzahl möglicher Treffer mit einem zugeordneten Zuverlässigkeitsmaß ausgegeben wird, so daß beispielsweise alle Treffer mit einem Zuverlässigkeitsmaß, das höher oder gleich einer bestimmten Schwelle, wie beispielsweise 20% ist, von der Datenbank ausgegeben werden.

Bei dem bevorzugten Ausführungsbeispiel der vorliegenden Erfindung wird dann eine neue Hypothese begonnen, wenn ein neues Identifikationsergebnis auftaucht, für das noch keine Hypothese existiert. Dieses Prozedere wird für eine bestimmte Anzahl von Blöcken durchgeführt, um dann in die Vergangenheit gerichtet zu untersuchen, ob eine bestimmte sich als zuverlässig herausgestellte Hypothese bereits zu Ende ist, um dann diese Hypothese als die wahrscheinlichste Hypothese zu erkennen.

Ein Vorteil der vorliegenden Erfindung besteht darin, daß das Konzept zuverlässig arbeitet und dennoch fehlertolerant insbesondere im Hinblick auf Übertragungsfehler ist. So wird nicht anhand eines einzigen Blockes versucht eine Entscheidung herbeizuführen, sondern es wird eine Folge von aufeinanderfolgenden Blöcken durch Hypothesenbildung gewissermaßen gemeinsam betrachtet und ausgewertet, so daß nicht kurzfristige Übertragungsstörungen bzw, allgemeines auftretendes Rauschen den gesamten Erkennungsprozeß hinfällig machen.

Weiterhin liefert das erfindungsgemäße Konzept automatisch eine Protokollierung der Übertragungsqualität vom Anfang bis zum Ende z. B. eines Werbespots. Auch wenn eine Hypothese als wahrscheinlichste Hypothese erkannt worden ist, wenn also bestimmt wird, daß ein bestimmter Werbespot da war, so sind dennoch Qualitätsschwankungen innerhalb des Werbespots anhand der Zuverlässigkeitsmaße nachvollziehbar. Ferner ist damit insbesondere die komplette zeitliche Kontinuität eines Werbespots als Beispiel für eine Informationsentität nachvollziehbar und protokollierbar, und zwar insbesondere dahingehend, daß nicht irgend etwas aus dem Werbespot ständig wiederholt worden ist, sondern daß der gesamte Werbespot vom Anfang des Werbespots bis zum Ende des Werbespots kontinuierlich gesendet worden ist.

Die vorliegende Erfindung ist ferner dahingehend vorteilhaft, daß durch Hypothesenbildung automatisch das Ende einer Informationsentität und der Beginn einer Informationsentität erkannt werden. Dies liegt daran, daß eine Zuordnung zu einer Informationsentität im allgemeinen eindeutig sein wird. Dies bedeutet, daß über einen bestimmten Zeitpunkt nicht mehrere Informationsentitäten gemeinsam abgespielt werden können, sondern daß zumindest für die übergroße Anzahl von Programminhalten nur eine Informationsentität im Informationssignal zu einem Zeitpunkt enthalten ist. Die Hypothesenuntersuchung und die Beurteilung der Hypothesen aufgrund der Hypothesenuntersuchung liefert automatisch einen Zeitpunkt, zu dem eine vorherige Informationsentität beendet ist und zu dem eine neue Informationsentität beginnt. Dies liegt an der bis in die Hypothesen hinein beibehaltenen Blockzuordnung. So entspricht nach wie vor eine Folge von Fingerabdrücken einer Folge von Blöcken, und entspricht wiederum eine Folge von Identifikationsergebnissen einer Folge von Fingerabdrücken, so daß eine Hypothese dem ursprünglichen Informationssignal in zeitlicher Hinsicht eindeutig zugeordnet ist.

Das erfindungsgemäße Konzept ist ferner dahingehend vorteilhaft, daß keine "Unentschieden"-Situationen zwischen zwei Hypothesen entstehen, auch wenn Informationsentitäten streckenweise dennoch das identische Audiomaterial haben, wie beispielsweise bei Kurzversionen oder Langversionen ein und desselben Songs.

Bevorzugte Ausführungsbeispiele der vorliegenden Erfindung werden nachfolgend Bezug nehmend auf die beiliegenden Zeichnungen detailliert erläutert. Es zeigen:

Fig. 1      ein Blockschaltbild einer erfindungsgemäßen Vorrichtung;

Fig. 2      ein Blockschaltbild einer für das in Fig. 1 gezeigte Ausführungsbeispiel verwendbaren Datenbank;

Fig. 3      eine schematische Darstellung eines Ausgabeergebnisses für eine Folge von Fingerabdrücken für eine Folge von Zeitintervallen sowie die zugeordneten Hypothesen;

Fig. 4a-4c      ein Beispielszenario für nachfolgende Anwendungsbeispiele;

Fig. 5a-5d      eine schematische Darstellung verschiedener Fehlauswertungen;

Fig. 6      ein Blockschaltbild eines bevorzugten Ausführungsbeispiels der vorliegenden Erfindung;

Fig. 7a-7c      eine Darstellung der Funktionalität des erfindungsgemäßen Konzepts für das in den Fig. 4a-4c dargestellte Ausgangsszenario;

Fig. 8    eine schematische Darstellung eines Informationssignals mit Informationseinheiten, Blöcken von Informationseinheiten und Informationsentitäten mit einer Mehrzahl von Blöcken;

Fig. 9    ein bekanntes Szenario zum Aufbauen einer Fingerabdruck-Datenbank; und

Fig. 10    ein bekanntes Szenario zum Audio-Identifizieren mittels einer gemäß Fig. 9 geladenen Fingerabdruck-Datenbank.

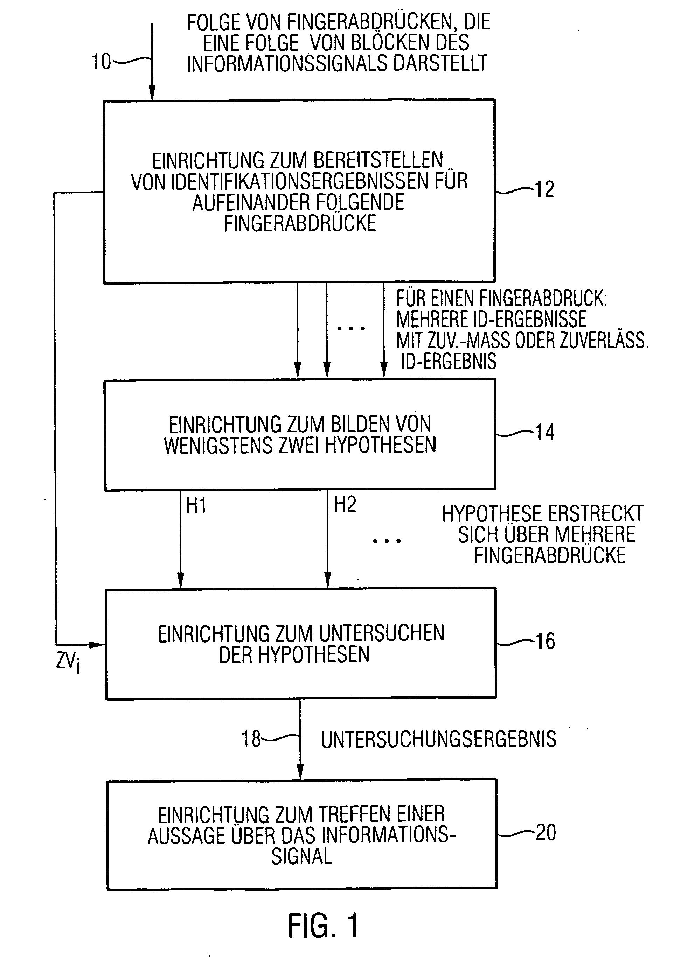

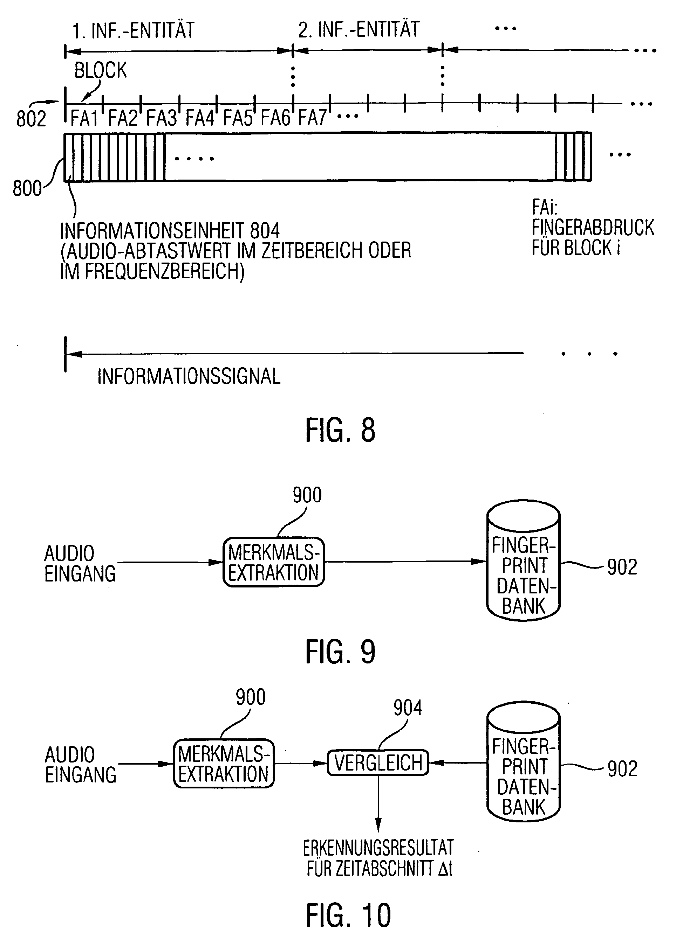

Fig. 1 zeigt ein Blockschaltbild einer Vorrichtung zum Analysieren eines Informationssignals gemäß einem bevorzugten Ausführungsbeispiel der vorliegenden Erfindung. Ein beispielhaftes Informationssignal ist bei 800 in Fig. 8 dargestellt. Das Informationssignal 800 besteht aus einer Folge 802 von zeitlich aufeinanderfolgenden Blöcken von Informationseinheiten, wobei die einzelnen Informationseinheiten 804 z. B. Audio-Abtastwerte, Video-Pixels oder Video-Transformationskoeffizienten etc. sein könnten. Eine Mehrzahl von Blöcken der Folge 802 bilden zusammen immer eine Informationsentität 806. Bei dem in Fig. 8 gezeigten Ausführungsbeispiel bilden die ersten sechs Blöcke die erste Informationsentität, und bilden die Blöcke 7, 8, 9, 10 die zweite Informationsentität. Ab den Blöcken 11 bis n ist in Fig. 8 z. B. eine dritte Informationsentität dargestellt. Eine Informationsentität könnte beispielsweise ein Musikstück, eine gesprochene Passage, ein Videobild oder auch z. B. ein Teil eines Videobildes sein. Eine Informationsentität könnte jedoch auch ein Text oder z. B. eine Seite eines Textes sein, wenn das Informationssignal auch Textdaten umfaßt.

Die in Fig. 1 gezeigte Vorrichtung ist ausgebildet, um unter Verwendung einer Folge von Fingerabdrücken FA1, FA2, FA3, ..., FAi zu arbeiten, die aus der Folge von Blöcken 802 erzeugt werden, oder die z. B. von einem Speicher abgerufen werden, wenn die Fingerabdrücke bereits vor der Analyse erzeugt worden sind oder vielleicht sogar mit dem Informationssignal mitgeliefert werden, je nach Ausführungsform. Es sei darauf hingewiesen, dass bei der Blockbildung auch Blocküberlappungstechniken eingesetzt werden können, wie sie z. B. aus der Audiocodierung bekannt sind.

Auf jeden Fall arbeitet die Vorrichtung zum Analysieren des Informationssignals unter Verwendung einer Folge von Fingerabdrücken für die Folge von Blöcken, so daß die Folge von Blöcken 802 durch die Folge von Fingerabdrücken FA1, FA2, FA3, FA4, ..., FAi dargestellt ist. Die Folge von Fingerabdrücken wird in einen Fingerabdruck-Eingang in eine Einrichtung 12 zum Bereitstellen von Identifikationsergebnissen für aufeinanderfolgende Fingerabdrücke eingespeist. Die Einrichtung 12 zum Bereitstellen von aufeinanderfolgenden Identifikationsergebnissen ist wirksam, um für die aufeinanderfolgenden Fingerabdrücke aufeinanderfolgende Identifikationsergebnisse zu liefern, wobei ein Identifikationsergebnis eine Zugehörigkeit eines Blocks von Informationseinheiten zu einer vorbestimmten Informationsentität darstellt. Wenn z. B. davon ausgegangen wird, daß ein Song eine zeitliche Länge hat, die in etwa sechs Blöcken entspricht, so liefern die sechs Blöcke zwar unterschiedliche Fingerabdrücke, in der Einrichtung 12 zum Bereitstellen ist jedoch signalisiert, daß alle diese sechs Blöcke zu der vorbestimmten Informationsentität, also zu dem besagten Lied gehören.

Je nach Ausführungsform wird die Einrichtung 12 zum Bereitstellen für einen Fingerabdruck einen oder mehrere Identifikationsergebnisse liefern. Dieser eine oder die mehreren Identifikationsergebnisse werden einer Einrichtung 14 zum Bilden von wenigstens zwei Hypothesen aus den Identifikationsergebnissen für die aufeinanderfolgenden Fingerabdrücke zugeführt. Insbesondere stellt eine erste Hypothese eine Annahme für die Zugehörigkeit der Folge von Blöcken zu einer ersten Informationsentität dar, und ist die zweite Hypothese eine Annahme für die Zugehörigkeit der Folge von Blöcken zu der zweiten Informationsentität. Die verschiedenen Hypothesen H1, H2, ... werden einer Einrichtung 16 zum Untersuchen der Hypothesen zugeführt, wobei die Einrichtung 16 ausgebildet ist, um gemäß eines einstellbaren Untersuchungsalgorithmus zu arbeiten, um schließlich ein Untersuchungsergebnis an einem Untersuchungsergebnisausgang 18 zu liefern.

Dieses Untersuchungsergebnis an der Leitung 18 wird dann einer Einrichtung 20 zum Treffen einer Aussage über das Informationssignal zugeführt. Die Einrichtung 20 zum Treffen einer Aussage über das Informationssignal ist ausgebildet, um eine Information über das Informationssignal basierend auf dem Untersuchungsergebnis auszugeben und kann vielerlei Einstellungen haben.

Für alle Einstellungen ist gemeinsam, daß die Aussage über das Informationssignal auf der Basis des Untersuchungsergebnisses 18 getroffen wird. Beispiele für verschiedene Aussagen über das Informationssignal bestehen darin, daß bestimmt wird, daß die Folge von Blöcken eine Informationsentität darstellt, die eine Hypothese hat, die am wahrscheinlichsten ist. Alternative Aussagen bestehen darin, daß eine Informationsentität mit dem Fingerabdruck beendet ist, der als zeitlich letzter Fingerabdruck zu der wahrscheinlichsten Hypothese beiträgt. Eine alternative Aussage, die durch die Einrichtung 20 getroffen werden kann, besteht darin, daß festgestellt wird, daß in dem Informationssignal eine Informationsentität an sich vorhanden ist oder nicht.

Das erfindungsgemäße Postprocessing, das insbesondere durch die Einrichtungen 14, 16 und 20 geliefert wird, also das Bilden von wenigstens zwei Hypothesen, das Untersuchen der Hypothesen und das Treffen einer Aussage auf der Basis eines Untersuchungsergebnisses ermöglicht somit nicht nur die Identifikation eines Stücks in einem an sich unbekannten, also zu analysierenden Informationssignal, sondern ermöglicht auch - abgesehen von der Identifikation eines Stücks an sich - die Erkennung des Endes eines ersten Stücks, also einer ersten Informationsentität, und das Detektieren des Beginns einer zweiten, auf die erste Informationsentität folgenden Informationsentität.

Im Hinblick auf die Werbeüberwachung liefert das erfindungsgemäße Postprocessing-Konzept jedoch auch die Möglichkeit, zu erfassen, ob ein bestimmtes Stück in dem Informationssignal vorhanden war oder nicht. Hierbei würden die aus dem Informationssignal gewonnenen Fingerabdrücke lediglich mit einem Satz von Fingerabdrücken, nämlich dem Satz von Fingerabdrükken, die die vorbestimmte Informationsentität, also einen bestimmten Werbespot darstellen, verglichen. Diese Aussage ist somit nicht primär dahingehend zu sehen, daß eine Informationsentität identifiziert wird, oder daß das Ende einer Informationsentität und der Beginn einer folgenden Informationsentität erfaßt werden, sondern besteht darin, zu erfassen, ob eine bestimmte Informationsentität in einem an sich unbekannten zu analysierenden Informationssignal vorhanden ist oder nicht.

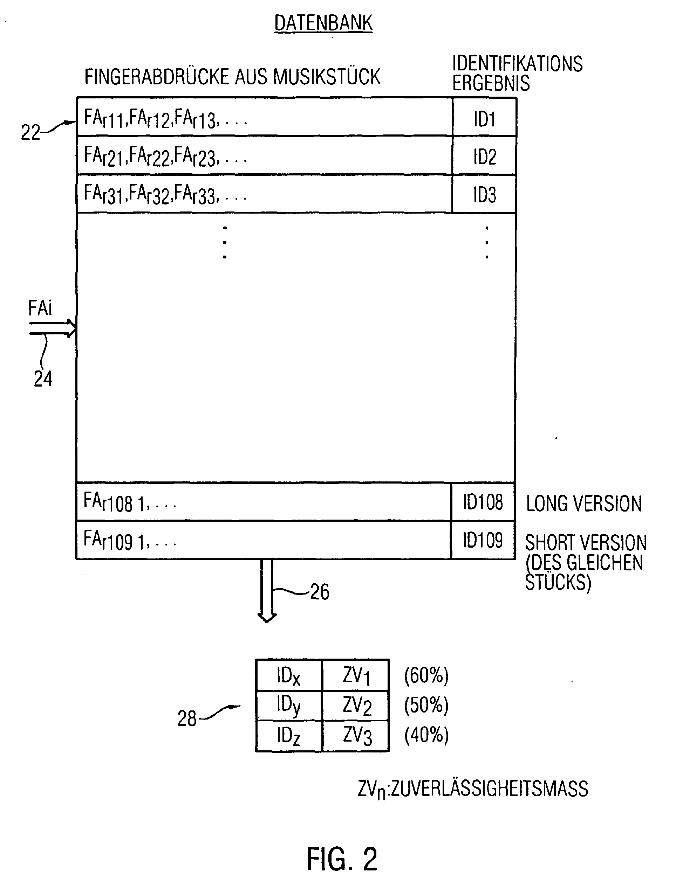

Fig. 2 zeigt eine spezielle bevorzugte Ausführungsform der Einrichtung 12 zum Bereitstellen von Identifikationsergebnissen für aufeinanderfolgende Fingerabdrücke. Bei einem bevorzugten Ausführungsbeispiel umfaßt die Einrichtung 12, wie es in Fig. 2 gezeigt ist, eine Datenbank, die verschiedene Referenzfingerabdrücke FArj umfaßt, die alle in Zuordnung zu einem Identifikationsergebnis, d. h. IDk, abgespeichert sind. Bei dem bevorzugten Ausführungsbeispiel werden die Fingerabdrücke FAi nach und nach, also zeitlich sequentiell verarbeitet. So wird ein Fingerabdruck FAi in die Datenbank über eine Eingangsleitung 24 eingespeichert. In der Datenbank wird dann der eingespeicherte Fingerabdruck FAi mit allen Referenzfingerabdrücken FArj verglichen. bei dem bevorzugten Ausführungsbeispiel ist die Datenbank nicht eine qualitative Datenbank, die feststellt, daß ein Eingangsfingerabdruck mit einem gespeicherten Referenzfingerabdruck übereinstimmt oder nicht, sondern ist die Datenbank eine quantitative Datenbank, die ein Abstandsmaß bzw. ein Zuverlässigkeitsmaß für die ausgegebenen Ergebnisse liefern kann. So würde die Datenbank 22 bei dem in Fig. 2 gezeigten bevorzugten Ausführungsbeispiel an ihrem Ausgang 26 z. B. das Ergebnis liefern, das in einer Ergebnistabelle 28 dargestellt ist. So würde die Datenbank z. B. sagen, daß der Fingerabdruck FAi auf ein Identifikationsergebnis IDx, also auf ein Musikstück beispielsweise x mit einer Zuverlässigkeit $ZV_1$ von 60% hinweist. Gleichzeitig wird die Datenbank jedoch auch sagen, daß der Fingerabdruck FAi mit einer Zuverlässigkeit von 50% auf ein Stück mit dem Identifikationsergebnis IDy hinweist. Schließlich könnte die Datenbank auch ausgeben, daß der Fingerabdruck FAi mit einem Zuverlässigkeitsmaß ZV3 von beispielsweise 40% auf ein wieder anderes Stück mit der Identifikation IDz hinweist.

Je nach Ausführungsform kann die gesamte Ergebnistabelle 28 der Einrichtung 14 zum Bilden von wenigstens zwei Hypothesen von Fig. 1 zugeführt werden. Alternativ könnte jedoch die Datenbank 22 selbst bereits eine Entscheidung treffen und immer nur den wahrscheinlichsten Wert, also im vorliegenden Fall das Ergebnis IDx der Einrichtung 14 zum Bilden von wenigsten zwei Hypothesen zuführen. In diesem Fall müßte nicht unbedingt das Zuverlässigkeitsmaß ZV1 ebenfalls der Einrichtung 14 zum Bilden von wenigstens zwei Hypothesen zugeführt werden. Vielmehr könnte auf die weitere Übermittlung der Zuverlässigkeitsmaße ZVi verzichtet werden. Alternativ könnte jedoch auch die Einrichtung 12 zum Bereitstellen der Identifikationsergebnisse, die gleichzeitig auch die Zuverlässigkeitsmaße liefert, ausgebildet sein, um die Zuverlässigkeitsmaße ZVi in entsprechender Reihenfolge in Zuordnung zu den Blöcken nicht der Einrichtung 14 zum Bilden von wenigstens zwei Hypothesen zuzuführen, sondern der Einrichtung 16 zum Untersuchen der Hypothesen, da diese Einrichtung 16 die Zuverlässigkeitsmaße erst benötigt, um z. B. die wahrscheinlichste Hypothese zu finden.

Aus der Datenbank 22 in Fig. 2 ist zu sehen, daß ein Identifikationsergebnis, wie z. B. ID1 mehrere zugeordnete Fingerabdrücke FAr11, FAr12, FAr13 haben kann, was darauf hindeutet, daß das Stück, das durch ID1 identifiziert wird, mehrere Blöcke hat. Je nach Implementierung kann jedoch auch ein einziger langer Fingerabdruck für das Stück mit der Identifikation ID1 gespeichert sein, der sich jedoch aus den einzelnen Fingerabdrücken FAr11, FAr12, FAr13, .... zusammensetzt. Die Datenbank würde dann den eingespeisten Fingerabdruck FAi, der von der Blocklänge abhängt und typischerweise viel kürzer ist als der lange Fingerabdruck, mit dem langen Fingerabdruck in jeder Zeile der Datenbank korrelieren, um festzustellen, ob ein Ausschnitt des langen abgespeicherten Referenzfingerabdrucks mit dem an der Leitung 24 eingespeisten Referenzfingerabdruck FAi übereinstimmt oder nicht. Das Zuverlässigkeitsmaß würde sich hierbei gewissermaßen automatisch ergeben, nämlich einfach durch quantitative Auswertung des Korrelationsergebnisses.

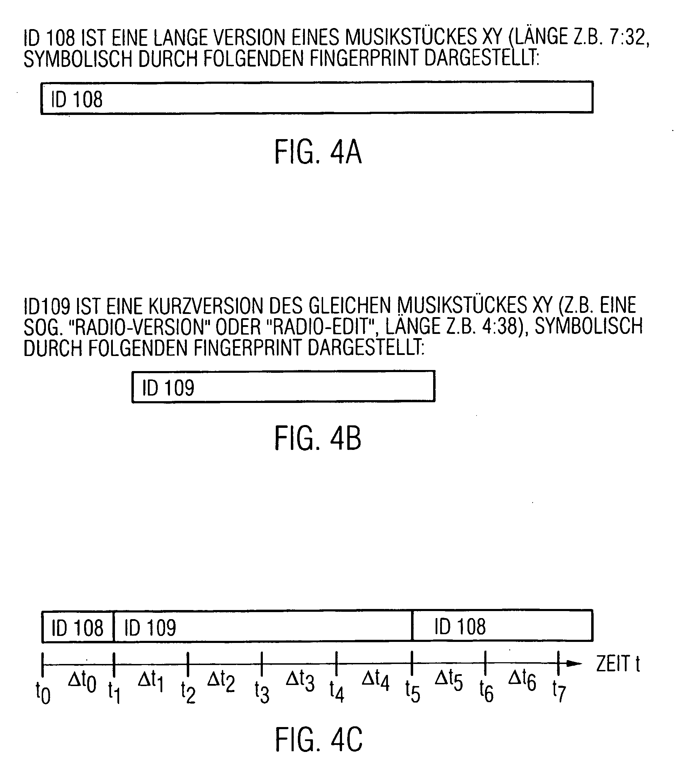

Ferner sei Bezug nehmend auf Fig. 2 bereits auf die beiden letzten Zeilen verwiesen, die mit den Identifikationsergebnissen ID108 und ID109 bezeichnet sind. ID108 bezeichnet eine lange Version eines Musikstücks, wie es noch Bezug nehmend auf Fig. 4a erläutert wird, während ID109 eine kurze Version desselben Musikstücks identifiziert, wie es in Fig. 4b dargestellt ist.

Wie es bereits ausgeführt worden ist, kann die Datenbank 22, also diese Implementierung der Einrichtung 12 zum Bereitstellen von Identifikationsergebnissen für aufeinanderfolgende Fingerabdrücke derart ausgebildet sein, daß sie immer nur das wahrscheinlichste Identifikationsergebnis liefert. Alternativ könnte die Datenbank 22 jedoch auch ausgebildet sein, um z. B. immer nur die Identifikationsergebnisse zu liefern, deren Wahrscheinlichkeit höher als eine Mindestschwelle ist, wie beispielsweise eine Schwelle von 5%. Dies würde dazu führen, daß die Anzahl der Zeilen der Tabelle von Fingerabdruck zu Fingerabdruck variieren wird. Wieder alternativ könnte die Datenbank 22 jedoch auch implementiert sein, um für jeden Eingangsfingerabdruck FAi eine bestimmte Anzahl von wahrscheinlichsten Kandidaten, wie beispielsweise die "Top Ten", also die zehn wahrscheinlichsten Kandidaten der Einrichtung 14 zum Bilden von wenigsten zwei Hypothesen zuzuführen.

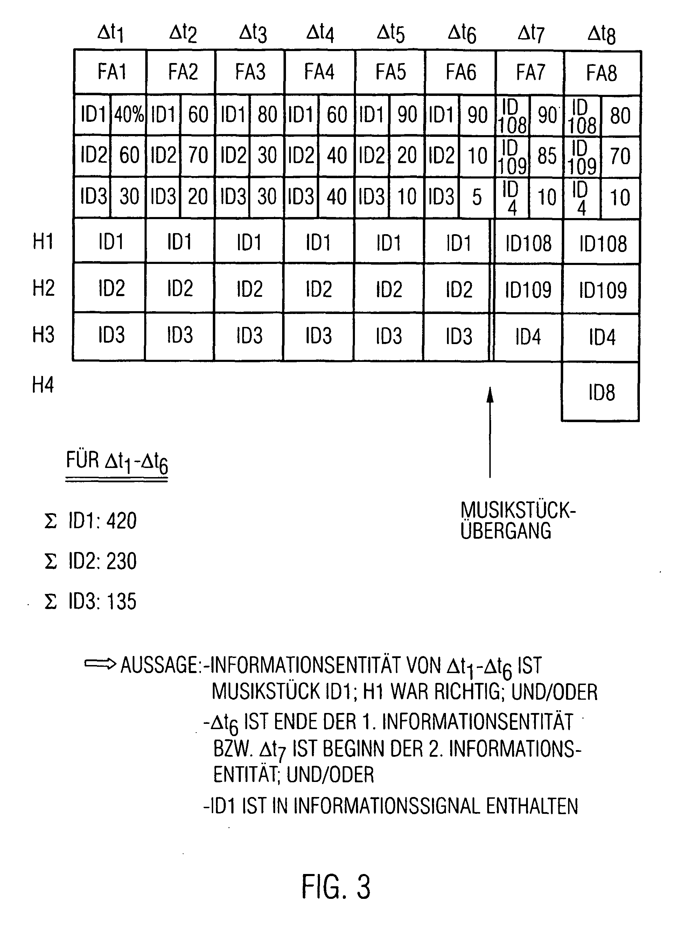

Nachfolgend wird anhand von Fig. 3 eine Ausführungsform der Datenbank 22 dargestellt, bei der die Datenbank immer die drei wahrscheinlichsten Identifikationsergebnisse samt zugehöriger Zuverlässigkeitswerte der Einrichtung 14 zum Bilden von Hypothesen zuführt, also gewissermaßen eine "Top Three"-Implementierung umfaßt. So ist aus Fig. 3 zu sehen, daß für den Fingerabdruck FA1 Identifikationsergebnisse ID1, ID2, ID3 geliefert werden, und zwar mit den jeweiligen Zuverlässigkeitsmaßen 40%, 60% oder 30%. Für das Zeitintervall $\Delta t2$, also für den Fingerabdruck FA2 wird wieder eine Lieferung der Identifikationsergebnisse ID1, ID2, ID3 stattfinden, nun jedoch mit einer anderen jeweiligen Wahrscheinlichkeit, also mit einem anderen jeweiligen Zuverlässigkeitsmaß, das lediglich beispielhaft in Fig. 3 prozentual dargestellt ist. Dieses Prozedere wird für sämtliche Eingangs-Fingerabdrücke FA1 bis FA8 durchgeführt. Der Einrichtung 14 zum Bilden von wenigstens zwei Hypothesen, wie es in Fig. 1 dargestellt ist, werden diese Identifikationsergebnisse geliefert. Die Einrichtung 14 zum Bilden von wenigstens zwei Hypothesen ist ausgebildet, um immer dann, wenn ein neues Identifikationsergebnis von der Einrichtung 12 zum Bereitstellen der Identifikationsergebnisse geliefert wird, eine neue Hypothese zu beginnen. Dies ist aus Fig. 3 daraus ersichtlich, daß beim Zeitpunkt $\Delta t1$ die Hypothesen H1, H2, H3 mit ID1, ID2 bzw. ID3 begonnen werden, und daß im Zeitintervall $\Delta t7$ wieder neue Hypothesen mit ID108, ID109, ID4 begonnen werden, und daß im Zeitintervall $\Delta t8$ aufgrund der Tatsache, daß dort bei dem gezeigten Beispiel ID8 zum ersten Mal auftritt, eine weitere Hypothese H4 für ID8 begonnen wird.

Die Einrichtung 14 zum Bilden von wenigstens zwei Hypothesen ist daher wirksam, um für jeden neuen Fingerabdruck zu sehen, ob ein neues Identifikationsergebnis kommt, um eine neue Hypothese zu beginnen, und um eine bereits früher begonnene Hypothese dahingehend weiterzuführen, wenn für einen Zeitabschnitt $\Delta ti$ für die bereits früher begonnene Hypothese in den "Top Three" oder "Top x" ein Element enthalten ist, das, wenn auch mit geringerer Wahrscheinlichkeit dennoch ein Identifikationsergebnis für eine gerade begonnene Hypothese liefert. Dieses Prozedere wird eine bestimmte Zeit lang fortgeführt. Dann, beispielsweise zu vorbestimmten Zeitpunkten oder, getriggert durch einen Benutzer, etc. wird die Einrichtung 16 zum Untersuchen der Hypothesen die für die Vergangenheit gebildeten Hypothesen untersuchen und für den in Fig. 3 gezeigten Fall beispielsweise die Zuverlässigkeitsmaße der Hypothesen H1, H2, H3 für die Zeiträume $\Delta t1$ bis $\Delta t6$ addieren. Die Einrichtung 16 zum Untersuchen von wenigstens zwei Hypothesen würde dann feststellen, daß das Stück am wahrscheinlichsten ID1 ist, daß also die Hypothese H1 für den Zeitraum $\Delta t1$ bis $\Delta t6$ die wahrscheinlichste Hypothese ist, da das Zuverlässigkeitsmaß einen Wert von 420 erreicht, während für die zweite Hypothese lediglich ein Zuverlässigkeitsmaß von 230 erreicht wird, und während für die dritte Hypothese lediglich ein Zuverlässigkeitsmaß von 135 erreicht wird.

Bei dem in Fig. 3 gezeigten Fall starten alle drei Hypothesen gleichzeitig und enden alle drei Hypothesen gleichzeitig. Dies muß jedoch nicht zwingend so sein. So könnte die Hypothese H1 z. B. früher enden, also z. B. zum Zeitpunkt $\Delta t5$. Das Zuverlässigkeitsmaß von ID1 müßte in diesem Fall um 90 reduziert werden, womit man bei einem Wert von 330 ankommen würde. In diesem Fall würde sich ergeben, daß die Hypothese H1 trotzdem die wahrscheinlichste Hypothese ist, obgleich Hypothese H2 über einen längeren Zeitraum, jedoch insgesamt mit geringerer Wahrscheinlichkeit vorhanden ist. Aus dem in Fig. 3 gezeigten Beispiel ist ferner zu sehen, daß die Hypothese H1 trotz der Tatsache, daß sie für $\Delta t1$ weniger wahrscheinlich war als die Hypothese H2, am Ende "die Nase vorn" hat.

Aus Fig. 3 ist ferner auch zu sehen, daß eine Hypothese auch "Löcher" dahingehend haben könnte, daß beispielsweise im Zeitintervall $\Delta t4$ aus irgendwelchen Gründen, beispielsweise aus Gründen der Störung eines Übertragungskanals etc. lediglich ID2 und ID3 mit vernünftiger Wahrscheinlichkeit geliefert werden, nicht jedoch ID1. Dann müßte der Zuverlässigkeitswert für ID1 um 60 reduziert werden, was wiederum dahingehend zum Ergebnis haben würde, daß die Gesamtzuverlässigkeit statt 420 360 wäre, so daß auch in diesem Fall die Hypothese H1 die wahrscheinlichste Hypothese ist.

Aus den vorstehend beschriebenen Szenarien ist daher zu sehen, daß das erfindungsgemäße Konzept, das auf der Basis eines Postprocessings mit Hypothesen arbeitet und einerseits die Sequenz und andererseits die Zuverlässigkeitsmaße der einzelnen Fingerabdruckidentifikationsvorgänge berücksichtigt, außerordentlich robust gegenüber Übertragungsfehlern und auch gegenüber problematischen Funktionalitäten in der Datenbank oder auch gegenüber Fingerabdrücken ist, die sich für manche Informationsentitäten, wie z. B. Musikstücke, Videobilder, Texte, etc. vielleicht nicht so stark voneinander unterscheiden, wie man es sich wünschen würde.

Bei einem bevorzugten Ausführungsbeispiel ist eine Hypothese ein gespeichertes Protokoll (Fig. 3: H1, H2, H3, ...), vorzugsweise in der Form einer gespeicherten Liste, das einerseits einen Hinweis auf die Informationsentität, für die die Hypothese aufgestellt wird, und andererseits einen Hinweis auf Fingerabdrücke bzw. Blöcke von Informationseinheiten, für die die Hypothese geführt wird, aufweist. Vorzugsweise enthält das Protokoll auch noch für einen Block bzw. Fingerabdruck ein Zuverlässigkeitsmaß.

Aus Fig. 3 ist ferner zu erkennen, daß sich die erste Informationsentität nur über den Zeitraum Δt1 bis Δt6 erstreckt und ab Δt7 eine neue Entität beginnt. Dies ist insbesondere auch daraus ersichtlich, daß alle drei Hypothesen gleichzeitig enden, bzw. daß, auch wenn die Hypothese H3 beispielsweise sich noch über Δt7 erstreckt hätte, nunmehr völlig andere Identifikationswerte mit sehr hoher Wahrscheinlichkeit, nämlich ID108 und ID109 mit Wahrscheinlichkeiten von 90 und 85 auftreten und damit die "klaren Gewinner" aus dem vorherigen Zeitraum "ablösen".

Am Ende von Fig. 3 sind die verschiedenen Aussagen, die beispielhaft getroffen werden können, dargestellt, nämlich daß die Informationsentität im Zeitraum Δt1 bis Δt6 das durch ID1 identifizierte Musikstück ist. Alternativ könnte die Aussage auch dahingehend lauten, daß ein Informationsentität-Wechsel zwischen Δt6 und Δt7 stattfindet. Alternativ könnte eine Aussage jedoch auch dahingehend lauten, daß das Musikstück, das durch ID1 identifiziert ist, im Informationssignal enthalten ist.

Nachfolgend wird Bezug nehmend auf die Fig. 9 und 10 zunächst allgemeiner auf Datenbanksysteme eingegangen, wie sie in Verbindung mit der vorliegenden Erfindung vorteilhaft eingesetzt werden können. Die vorliegende Erfindung basiert somit auf einem System zu Identifikation von Audiomaterial, wie beispielsweise Musik. Das System kennt zwei Betriebsphasen. In der Trainings-Phase, die anhand von Fig. 9 dargestellt ist, lernt das Erkennungssystem die später zu identifizierenden Stücke. In der Identifikations-Phase, die in Fig. 10 dargestellt ist, können die vorher trainierten Audiostücke wiedererkannt werden.

Um ein Stück Musik - oder auch jedes andere Tonsignal - zu identifizieren, wird aus diesem ein kompakter und einzigartiger Datensatz extrahiert, der auch als Fingerprint oder Signatur bezeichnet wird. Diese Extraktion findet in einer Block Merkmalsextraktion 900 statt. In der Trainings- oder Einlernphase werden von einem Satz bekannter Audioobjekte solche Fingerprints erstellt und in einer Fingerprint-Datenbank 902 abgelegt. Vorzugsweise ist die Merkmalsextraktionseinrichtung 900 ausgebildet, um als Merkmal das SFM-Merkmal zu verwenden, wobei SFM für "Spectral Flatness Measure" steht. Selbstverständlich können auch andere Fingerabdruckserzeugungssysteme bzw. Merkmalsextraktionsergebnisse eingesetzt werden. Es hat sich jedoch herausgestellt, daß Tonalitäts-bezogene Merkmale und insbesondere das SFM-Merkmal einerseits eine besonders gute Unterscheidungskraft und andererseits eine besonders gute Kompaktheit haben. Zu diesem Zweck wird jeder Block zunächst einer Zeit-Frequenz-Umsetzung unterzogen, um dann mit den aus der Zeit-Frequenz-Umsetzung erzeugten Werten gemäß folgender Gleichung ein SFM für einen Block zu berechnen.

$$ SFM = \frac{\left[\prod_{n=0}^{N-1} X(n)\right]^{\frac{1}{N}}}{\frac{1}{N} \sum_{n=0}^{N-1} X(n)} $$

In dieser Gleichung stellt $X(n)$ das Quadrat eines Absolutwerts einer Spektralkomponente mit den Index n dar, wobei N die Gesamtanzahl der Spektralkoeffizienten eines Spektrums darstellt. Es ist aus der Gleichung zu sehen, daß das SFM-Maß gleich dem Quotienten aus dem geometrischen Mittelwert der Spektralkomponenten und dem arithmetischen Mittelwert der Spektralkomponenten ist. Es ist bekannt, daß der geometrische Mittelwert immer kleiner oder höchstens gleich dem arithmetischen Mittelwert ist, so daß das SFM einen Wertebereich zwischen 0 und 1 hat. In diesem Kontext zeigt ein Wert nahe 0 ein tonales Signal an, und zeigt ein Wert nahe 1 ein ziemlich rauschartiges Signal mit einer flachen Spektralkurve an. Es sei darauf hingewiesen, daß der arithmetische Mittelwert und der geometrische Mittelwert nur gleich sind, wenn alle $X(n)$ identisch sind, was einem vollständig atonalen, d. h. rauschartigen oder pulsartigen Signal entspricht. Wenn in einem Extremfall jedoch nur eine Spektralkomponente einen sehr hohen Wert hat, während andere Spektralkomponenten $X(n)$ sehr kleine Werte haben, wird das SFM-Maß einen Wert nahe 0 haben, was ein sehr tonales Signal andeutet.

Das SFM-Konzept ist sowie andere Merkmalsextraktionskonzepte, um Fingerabdrücke zu erzeugen, sind z. B. in der WO 03/007185 dargestellt.

In der Identifikations-Phase, die in Fig. 10 dargestellt ist, findet ebenfalls typischerweise dieselbe Merkmalsextraktion 900 wie bei der Trainings-Phase statt. Insbesondere wird der Fingerprint, welcher von dem Audio-Objekt am Audioeingang für einen Zeitabschnitt Δt extrahiert wurde, mit den Referenz-Fingerprints der Fingerprint-Datenbank 902 mittels eines Vergleichers 904 verglichen, wobei der Vergleicher typischerweise in der Einrichtung 12 zum Bereitstellen von Identifikationsergebnissen, wie sie anhand von Fig. 1 dargestellt worden ist, enthalten sein wird. Hierauf erhält man bei Feststellung einer Übereinstimmung anhand eines bestimmten Kriteriums ein Erkennungsresultat für den Zeitabschnitt Δt. Wird also eine Übereinstimmung anhand eines bestimmten Kriteriums festgestellt, so kann der unbekannte Fingerprint, und damit der Ausschnitt aus dem unbekannten Audio-Objekt, einem Referenzmaterial in der Datenbank, also einer Liste von Identifikationsergebnissen IDi, IDi+1, ... mit verschiedenen Zuverlässigkeitswerten zugeordnet werden.

Erfindungsgemäß wird nunmehr nicht nur ein unbekanntes Audioobjekt am Eingang genau einem Referenz-Audioobjekt in der Referenz-Datenbank zugeordnet, und zwar nur für einen Zeitpunkt Δt, sondern es wird kontinuierlich gearbeitet, ohne Unterbrechung des Datenstroms am Eingang. Erfindungsgemäß wird eine Zuordnung verschiedener Ausschnitte aus Audio-Objekten jeweils zu den korrekten Audio-Objekten aus der Referenzdatenbank vorgenommen. Damit wird eine lückenlose Abfolge, d. h. ein Protokoll, der identifizierten Audio-Objekte am Eingang erhalten.

Nachfolgend wird anhand der Fig. 4a bis 5d eine besondere Schwierigkeit der kontinuierlichen Analyse eines kontinuierlichen Audiodatenstroms dargestellt. Es muß nämlich das Audio-Objekt in Abschnitte der Länge $\Delta tx$, also in einzelne Blöcke zerlegt werden, um für den Teilabschnitt des Audiodatenstroms eine Zuordnung zu einem Referenzelement in der Datenbank vornehmen zu können. Es kann nun vorkommen, daß diese Zuordnung eines einzelnen Abschnitts des Audiodatenstroms nicht immer eindeutig ist und erst im Zusammenhang mit vorherigen und folgenden Zuordnungen eindeutig wird. Wenn man Einzelzuordnungen vornimmt und diese in einem weiteren Schritt lediglich zusammenfaßt, erhält man fehlerhafte Erkennungsprotokolle, was nachfolgend dargestellt wird.

Fig. 4a stellt eine lange Version eines Musikstücks XY dar, das auch durch einen in Fig. 4a dargestellten langen Fingerprint dargestellt wird, wobei diesem Fingerprint das Identifikationsergebnis ID108 zugeordnet ist. Fig. 4b zeigt dasselbe für eine Kurzversion des gleichen Musikstücks XY. ID109 verweist somit auf eine Kurzversion des Musikstücks XY, während ID108 auf eine Langversion dieses Musikstücks verweist. Nachdem die Kurzversion kürzer als die Langversion ist, ist auch der Fingerprint in Fig. 4b kürzer als der Fingerprint in Fig. 4a. In der Weise, in der beide Blöcke untereinander dargestellt sind, enthalten die Musikstücke und damit auch die Fingerprints ID108 und ID109 identisches Audiomaterial bzw. identische Fingerprintdaten. ID109 ist also eine Teilmenge von ID108. Aus Fig. 4c ist damit ersichtlich, daß die lange Version einen Anfangsabschnitt hat im Zeitraum $\Delta t0$, der in der kurzen Version nicht vorhanden ist. Im Mittelabschnitt zwischen t1 bis t5 sind die Langversion und die Kurzversion identisch, während die lange Version wieder zwischen dem Zeitpunkt t5 und t7 einen Musikabschnitt hat, der in der Kurzversion, die durch ID109 identifiziert ist, nicht vorhanden ist.

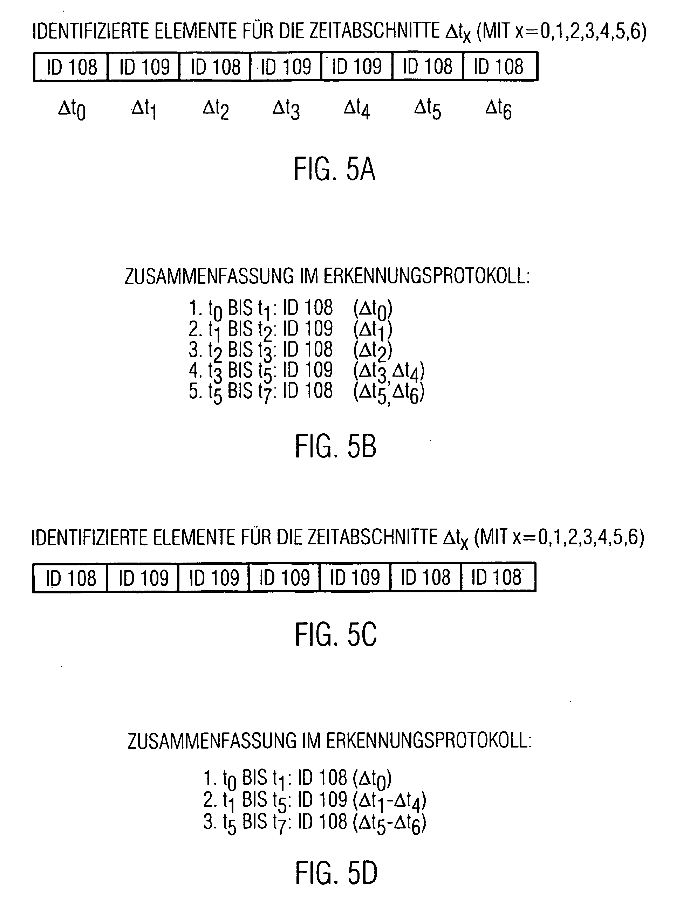

Nachfolgend wird anhand der Fig. 5a bis 5d dargestellt, wie bei einfachem Zusammenfassen, also ohne Hypothesenbildung mit den Einzelidentifikationen fehlerhafte Erkennungsprotokolle entstehen können. Es sei angenommen, daß am Eingang des Systems zum Zeitpunkt t0 das Musikstück ID108 aufgenommen wird. Ferner sei die Datenbank dahingehend wirksam, daß sie die in Fig. 5a gezeigten Elemente für die Zeitabschnitte $\Delta tx$ identifiziert. Es sei darauf hingewiesen, daß die Identifikation in Fig. 5a prinzipiell richtig ist, obgleich jedoch in den Zeitabschnitten $\Delta t1$ bis $\Delta t4$ sowohl ID108 als auch ID109 ausgegeben werden könnte. Letztendlich ist die Bestimmung der Identifikationsergebnisse in diesen Bereichen zweideutig, da die Datenbank bei nicht vorhandener Störung sowohl ID109 als auch ID108 ausgeben wird und sich aufgrund rechnerischer Unterschiede z. B. immer für den wahrscheinlichsten Wert entscheiden wird, so daß immer aufgrund irgendwelchen Rauschens einer der beiden Identifikationsergebnisse ID108 oder ID109 ein leicht höheres Zuverlässigkeitsmaß haben wird. Im Erkennungsprotokoll, das in Fig. 5b dargestellt ist, wird somit eine falsche Identifikation dahingehend vorgenommen, daß zu keinem Zeitpunkt das durch ID109 identifizierte Stück gespielt worden ist, sondern daß lediglich das mit ID108 identifizierte Stück abgespielt worden ist.

Nachfolgend wird anhand der Fig. 5c und 5d eine weitere Alternative dargestellt. Es wird davon ausgegangen, daß die Datenbank die in Fig. 5c gezeigte Situation ausgibt. Im Erkennungsprotokoll wird wieder eine falsche Zusammenfassung gegeben, nämlich dahingehend, daß ID109 zwischen T1 und T5 vorhanden war, während dies natürlich nicht zutreffend ist. Statt dessen wurde die Langversion des Musikstücks, also ID108 von $t_0$ bis $t_7$ abgespielt.

Ferner sind weitere Falscherkennungsprotokolle denkbar, welche durch die Mehrdeutigkeit der Einzelerkennungen für einen Abschnitt des Audiodatenstroms im Zeitraum $\Delta tx$ entstehen werden.

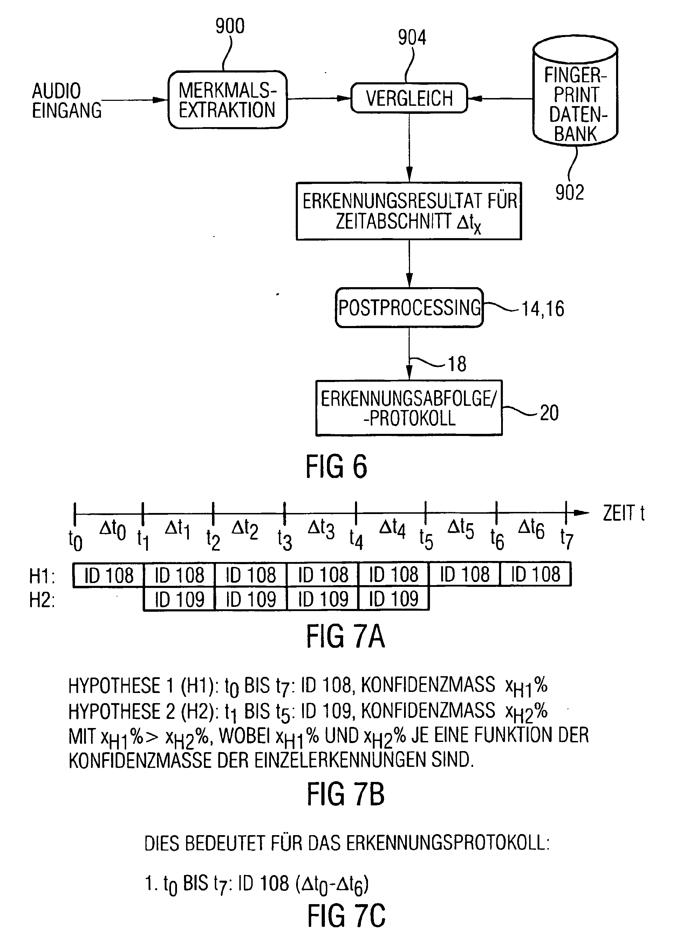

Erfindungsgemäß wird nunmehr auf das in Fig. 6 dargestellte allgemeine Konzept zugegriffen, bei dem die für einen Zeitabschnitt $\Delta tx$ erhaltenen Erkennungsresultate, also die Ausgangssignale der Einrichtung 12 von Fig. 1, die je nach Implementierung die Einrichtungen 900, 904, 902 vereinigen kann, einem Postprocessing unterzogen werden, das im wesentlichen in der Einrichtung zum Bilden von wenigstens zwei Hypothesen und der Einrichtung zum Untersuchen der Hypothesen von Fig. 1 entspricht. Hierauf wird dann unter Verwendung des Postprocessings, also unter Verwendung der bei dem Postprocessing erhaltenen Untersuchungsergebnisse eine Aussage über das Informationssignal in Form einer Erkennungsabfolge bzw. eines Erkennungsprotokolls gezogen.

In der Postprocessing-Stufe wird die Wahrscheinlichkeit für den Übergang von einem identifizierten Referenzaudioobjekt für den Zeitabschnitt $\Delta tx$ zu einem beliebigen anderen Referenzaudioobjekt für den Zeitabschnitt $\Delta t_{x+1}$ als gleich angenommen. Hieraus werden verschiedene zunächst parallel betrachtete Hypothesen für zusammenhängende Audioabschnitte aus den Einzelerkennungen gebildet. Es ist zu beachten, daß Einzelerkennungen dann zu einer Hypothese zusammengefügt werden, wenn sie sich auf ein und dasselbe Referenzaudiosignal beziehen und zeitkontinuierlich zusammenhängen. Das Erkennungsprotokoll ergibt sich aus einem Zusammenfügen der jeweils wahrscheinlichsten Hypothesen unter Beachtung des zeitlichen Fortschritts. Nachfolgend wird ein bevorzugter Algorithmus detailliert dargestellt.

Zunächst werden verschiedene Hypothesen für zusammenhängende Audioabschnitte aus den Ein-

zelerkennungen für die Zeitabschnitte $\Delta$tx (mit x = N, N+1, N+2, ...; wobei $t_N$ der Startzeitpunkt für die jeweilige Hypothese darstellt) für je ein erkanntes Referenzaudioobjekt gebildet.

Einzelerkennungen werden dann zu einer Hypothese zusammengesetzt, wenn die Einzelerkennungen zeitlich kontinuierlich aufeinander folgen.

Die zeitliche Kontinuität ist ein weiteres Element, das dazu dient, festzustellen, ob eine bereits bestehende Hypothese fortgesetzt wird, oder ob eine neue Hypothese begonnen wird. So sei das Szenario betrachtet, indem ein bestimmtes z. B. Gitarrensolo in einem Stück in der Kurzversion des Stücks ziemlich am Anfang des Stücks kommt und in einer Langversion des Stücks eher in der Mitte des Stücks.

Bei einem bevorzugten Ausführungsbeispiel gibt die Datenbank, also die Einrichtung zum Bereitstellen von Identifikationsergebnissen, nicht nur eine Fingerabdruckidentifikation aus, sondern auch einen Zeitwert, der sich daraus ergibt, dass der Identifikationsfingerabdruck in der Datenbank eine Länge hat, und der eingegebene (kurze) Fingerabdruck lediglich mit einem Teil des (langen) Fingerabdrucks in der Datenbank übereinstimmt.

Bei dem vorstehend beschriebenen Szenario würde die Datenbank für das Gitarrensolo vielleicht zwei ID-Ergebnisse liefern (kurze Version und lange Version), jedoch mit zwei unterschiedlichen Zeitindizes. Der Zeitindex für das ID-Ergebnis für die kurz Version ist dabei kleiner als der Zeitindex für die lange Version. Auf der Basis des Zeitindex ist die Einrichtung zum Bilden der Hypothesen nunmehr in der Lage, Hypothesen fortzuführen (wenn eine zeitliche Kontinuität zwischen dem Zeitindex und dem letzten Zeitindex in der Hypothese ist), oder neue Hypothesen zu beginnen, wenn keine Kontinuität in dem aktuell erhaltenen Zeitindex und einem letzten Zeitindex einer Hypothese vorhanden ist.

Jede zeitliche Diskontinuität bezogen auf ein Referenzaudioobjekt erzeugt eine neue Hypothese, wenn das folgende Element zeitlich einen größeren Abstand als ein festzulegender Zeitabstand Ta ist, oder wenn das folgende Element zeitlich vor dem vorherigen liegt.

Zur Hypothesenuntersuchung wird für jede Hypothese eine Addition der Konfidenzmaße, also der Zuverlässigkeitswerte bzw. der Maße für die Plausibilität, der Einzelerkennungen vorgenommen.

Beginnend mit dem Zeitabschnitt $\Delta$t0 wird dann die Hypothese mit dem höchsten Konfidenzmaß als wahr gewertet und in das Erkennungsprotokoll übernommen. Für den nächsten Zeitabschnitt, welcher der ersten Hypothese folgt, wird erneut die Hypothese mit dem höchsten Konfidenzmaß als wahr gewertet und in das Erkennungsprotokoll übernommen usw.

Für das oben bezeichnete Beispiel ergibt sich somit ein Ablauf, der anhand der Fig. 7a bis 7c dargestellt ist. Für den Zeitabschnitt $\Delta$t0 liefert die Datenbank, wie sie beispielsweise in Fig. 2 dargestellt ist, nur ein Identifikationsergebnis, nämlich ID108, welches eine Wahrscheinlichkeit bzw. ein Zuverlässigkeitsmaß hat, das oberhalb einer Schwelle ist. Im Zeitintervall $\Delta$t1, also für den Block von Informationseinheiten, die sich über das Zeitintervall $\Delta$t1 erstrecken, liefert die Datenbank zwei Ergebnisse, die ein Zuverlässigkeitsmaß haben, das über einer Schwelle ist. Die zwei Ergebnisse werden auch für die Blöcke zwischen den Zeitpunkten t2 bis t5 erhalten. Dann, für den Zeitraum t5 bis t7 liefert die Datenbank wiederum lediglich ein einziges Identifikationsergebnis, dessen Zuverlässigkeitsmaß oberhalb einer Schwelle ist.

Die Einrichtung 14 (Fig. 1) zum Bilden von wenigstens zwei Hypothesen ist ausgebildet, um zum Zeitpunkt $t_0$ aufgrund des Identifikationsergebnisses ID108 eine erste Hypothese zu starten, und um zum Zeitpunkt t1 aufgrund des neu hinzugekommenen Identifikationsergebnisses ID109 eine neue Hypothese, nämlich die Hypothese H2, zu starten.

Irgendwann nach dem Zeitpunkt $t_7$ wird dann die in Fig. 7a gezeigte Hypothesensituation mit den Hypothesen H1 und H2 betrachtet, um dann aufgrund der Untersuchung der Hypothesen, die so ablaufen kann, wie es in Fig. 7b dargestellt ist, für jede Hypothese die Funktionen für die Konfidenzmaße der Einzelerkennungen, also $x_{H1}$ und $x_{H2}$ zu berechnen.

Wenn davon ausgegangen wird, daß zwischen $t_1$ und $t_5$ die Identifikationsergebnisse ID108 und ID109 mit gleicher Wahrscheinlichkeit auftreten, so wird bei dem in Fig. 7a gezeigten Ausführungsbeispiel lediglich die erste Hypothese H1 das Rennen machen, da die Hypothese zwar zwischen $t_1$ und $t_5$ genauso wahrscheinlich war wie die Hypothese H2, da die Hypothese H1 jedoch im Zeitraum $\Delta$t0 und im Zeitraum $\Delta$t5 und im Zeitraum $\Delta$t6 gilt, also ein Zuverlässigkeitsmaß für eine Einzelerkennung beiträgt, die für die Hypothese H2 nicht gegeben wird. Dies bedeutet somit für das Erkennungsprotokoll den in Fig. 7c gezeigten richtigen Fall, daß nämlich das mit ID108 bezeichnete Stück vom Zeitpunkt t0 bis zum Zeitpunkt t7 abgespielt worden ist.

Beginnend bei $t_0$ wird somit die Hypothese H1 ausgewählt, da es bis t7 keine Hypothese mit einem höheren Konfidenzmaß gibt. Die Hypothese H2 wird verworfen, wobei prinzipiell sämtliche Hypothesen verworfen werden können, die parallel zu einer anderen Hypothese existieren, die als die wahrscheinlichste ausgewählt worden ist.

Erfindungsgemäß wird somit genau die Sequenz, hier im Beispiel ein Element, nämlich ID108, protokolliert, welche auch tatsächlich am Audioeingang abgespielt wurde.

Es sei darauf hingewiesen, daß es für die Bestimmung des Endes einer Hypothese verschiedene Möglichkeiten gibt. So kann - unabhängig von der Hypothesensituation - ein Informationsentitätsende z. B. ermittelt werden aus dem Audiosignal selbst, wenn beispielsweise eine Pause mit einer bestimmten Minimallänge auftritt. Nachdem dieses Kriterium jedoch dann nicht wirkt, wenn zwischen zwei Informationsentitäten überblendet ("Fading") wird, oder wenn zwei Stücke derart schnell aufeinanderfolgen, daß keine merkbare Pause zu finden ist, wird es bevorzugt, aufgrund der in der Vergangenheit betrachteten Hypothesen ein Informationsentitätsende zu bestimmen. Dies kann beispielsweise dahingehend stattfinden, daß eine Hypothese dann als beendet angesehen wird, wenn z. B. zwei oder mehr Blöcke kein Identifikationsergebnis mehr mit einem Zuverlässigkeitswert oberhalb einer bestimmten Minimalschwelle der Einrichtung 14 zum Bilden von Hypothesen zugeführt werden. Alternativ kann auch, beispielsweise für den in Fig. 3 gezeigten Fall einfach damit begonnen werden, zu irgendeinem Zeitpunkt in die Vergangenheit gerichtet die Werte der Hypothesen für eine vorbestimmte Anzahl von Blöcken aufzuaddieren, um dann zu sehen, welche Hypothese am Ende, also nach einer bestimmten Anzahl von z. B. 20 Blöcken für bestimmte Blöcke den höchsten Wert hatte und damit überlebt hat und die anderen Hypothesen "ausgestochen" hat. Dies würde bei dem in Fig. 3 gezeigten Beispiel bedeuten, daß die Hypothesen, daß die Informationsentität ID1 oder ID2 oder ID3 ist, auch für die Zeitabschnitte $\Delta$t7 und $\Delta$t8 weitergeführt werden würden, wobei dies jedoch nichts an der Erkennung von ID1 ändern würde, da neue Hypothesen, also die Hypothese für ID108, ID109, ID4 und ID8 erst wesentlich später, also für Blöcke von $\Delta$t7 und $\Delta$t8 oder darüber begonnen werden und damit erst viel später oder überhaupt nicht derart hohe kombinierte Zuverlässigkeitswerte erreichen.

Aus dem vorstehenden wird ersichtlich, daß das Ende einer Hypothese nicht unbedingt aktiv bestimmt werden muß, sondern daß sich dieses Ende aus der Analyse der Vergangenheit, also der begonnenen Hypothesen automatisch ergeben kann. Vorzugsweise wird daher immer dann, wenn ein neues Identifikationsergebnis mit einem Zuverlässigkeitsmaß oberhalb einer Signifikanzschwelle in Erscheinung tritt, eine neue Hypothese begonnen, wobei dann irgendwann in die Vergangenheit geblickt wird, um zu sehen, welche Hypothese für einen bestimmten Zeitraum überlebt, wobei hierfür nicht explizit ein Ende einer Hypothese bestimmt werden muß, da es sich automatisch selbst ergibt.

Abhängig von der Gegebenheit, kann das erfindungsgemäße Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt, kann die Erfindung somit als ein Computer-Programm mit einem Programmcode zur Durchführung des Verfahrens realisiert werden, wenn das Computer-Programm auf einem Computer abläuft.

**Patentansprüche**

1. Vorrichtung zum Analysieren eines Informationssignals, das eine Folge (802) von Blöcken von Informationseinheiten (804) aufweist, wobei eine Mehrzahl von aufeinanderfolgenden Blöcken der Folge von Blöcken eine Informationsentität (806) darstellt, unter Verwendung einer Folge von Fingerabdrücken (FAi) für die Folge von Blöcken, so daß die Folge von Blöcken durch die Folge von Fingerabdrücken dargestellt ist, mit folgenden Merkmalen:

   einer Einrichtung (12) zum Bereitstellen von Identifikationsergebnissen (IDi) für aufeinanderfolgende Fingerabdrücke, wobei ein Identifikationsergebnis eine Zugehörigkeit eines Blocks von Informationseinheiten zu einer vorbestimmten Informationsentität darstellt, und wobei es für jedes Identifikationsergebnis ein Zuverlässigkeitsmaß gibt, wobei die Einrichtung (12) zum Bereitstellen ausgebildet ist, um für einen ersten Fingerabdruck ein erstes Identifikationsergebnis zu erzeugen, und um für einen folgenden Block ein zweites Identifikationsergebnis zu erzeugen, das sich von dem ersten Identifikationsergebnis unterscheidet;
   einer Einrichtung (14) zum Bilden von wenigstens zwei Hypothesen aus den Identifikationsergebnissen für die aufeinanderfolgenden Fingerabdrücke, wobei eine erste Hypothese eine Annahme für die Zugehörigkeit der Folge von Blöcken zu einer ersten Informationsentität ist, und wobei eine zweite Hypothese eine Annahme für die Zugehörigkeit der Folge von Blöcken zu einer zweiten Informationsentität ist, wobei die Einrichtung (14) zum Bilden ausgebildet ist, um ansprechend auf das erste Identifikationsergebnis die erste Hypothese zu beginnen oder die bereits bestehende erste Hypothese weiterzuführen und um ansprechend auf das zweite Identifikationsergebnis die zweite Hypothese zu beginnen oder die bereits bestehende zweite Hypothese weiterzuführen;
   einer Einrichtung (16) zum Untersuchen der wenigstens zwei Hypothesen durch Zusammenfassen der Zuverlässigkeitsmaße der Hypothesen, um ein Untersuchungsergebnis (18) zu erhalten; und
   einer Einrichtung (20) zum Treffen einer Aussage über das Informationssignal basierend auf dem Untersuchungsergebnis.

2. Vorrichtung nach Anspruch 1, bei der die Einrichtung (16) zum Untersuchen ausgebildet ist, um die Hypothesen im Hinblick auf für die Hypothesen gültige Wahrscheinlichkeitsinformationen zu untersuchen.

3. Vorrichtung nach Anspruch 1 oder 2, bei der die Einrichtung (20) zum Treffen einer Aussage ausgebildet ist, um zu bestimmen, daß die Folge von Blöcken eine Informationsentität darstellt, die eine Hypothese hat, die am wahrscheinlichsten ist, oder daß eine Informationsentität mit dem Fingerabdruck beendet ist, der als zeitlich letzter zu der wahrscheinlichsten Hypothese beiträgt, oder daß eine Informationsentität in dem Informationssignal vorhanden ist oder nicht.

4. Vorrichtung nach einem der vorhergehenden Ansprüche, bei der die Einrichtung (12) zum Bereitstellen ausgebildet ist, um für einen Fingerabdruck zwei unterschiedliche Identifikationsergebnisse zu erzeugen.

5. Vorrichtung nach Anspruch 4, bei der die Einrichtung (12) zum Bereitstellen ausgebildet ist, um für jeden der zwei unterschiedlichen Identifikationsergebnisse ein Zuverlässigkeitsmaß zu erzeugen.

6. Vorrichtung nach Anspruch 4 oder 5, bei der die Einrichtung (14) zum Bilden ausgebildet ist, um der ersten Hypothese ein erstes der zwei Identifikationsergebnisse und der zweiten Hypothese ein zweites der zwei Identifikationsergebnisse zuzuordnen.

7. Vorrichtung nach einem der Ansprüche 3 bis 6, bei der die Einrichtung (16) zum Untersuchen ausgebildet ist, um die Hypothese zu bestimmen, die ein höheres zusammengefaßtes Zuverlässigkeitsmaß hat.

8. Vorrichtung nach einem der vorhergehenden Ansprüche, bei der die Einrichtung (14) zum Bilden ausgebildet ist, um die erste oder zweite Hypothese zu beenden, wenn eine vorbestimmte Anzahl von Blöcken weder ein Identifikationsergebnis, das auf die erste Informationsentität hinweist, noch ein Identifikationsergebnis, das auf die zweite Informationsentität hinweist, erhalten wird.

9. Vorrichtung nach einem der vorhergehenden Ansprüche, bei der die Einrichtung (14) zum Bilden ausgebildet ist, um die erste oder zweite Hypothese zu beenden, wenn ein detektiertes Ereignis in dem Informationssignal auftritt.

10. Vorrichtung nach Anspruch 9, bei der ein Ereignisdetektor vorhanden ist, der ausgebildet ist, um einen Energiepegel in einem Block von Informationseinheiten, der unter einem Schwellenpegel liegt, als das Ereignis zu detektieren.

11. Vorrichtung nach einem der vorhergehenden Ansprüche, bei der die Einrichtung (12) zum Bereitstellen ausgebildet ist, um für jeden Fingerabdruck nur das zuverlässigste Identifikationsergebnis ohne oder mit Zuverlässigkeitsmaß auszugeben, um für einen Fingerabdruck eine vorbestimmte Anzahl von zuverlässigsten Fingerabdrücken jeweils mit oder ohne Zuverlässigkeitsmaß auszugeben, oder um für einen Fingerabdruck lediglich die Identifikationsergebnisse mit oder ohne Zuverlässigkeitsmaße auszugeben, die ein Zuverlässigkeitsmaß oberhalb einer Schwelle haben.

12. Vorrichtung nach einem der vorhergehenden Ansprüche, bei der die Einrichtung (16) zum Untersuchen ausgebildet ist, um explizite oder implizite Zuverlässigkeitsmaße, die zu einer Hypothese gehören, zusammenzuaddieren, um ein zusammengefaßtes Zuverlässigkeitsmaß zu erhalten.

13. Vorrichtung nach einem der vorhergehenden Ansprüche, bei der die Einrichtung (12) zum Bereitstellen ausgebildet ist,
um mit einem Fingerabdruck eine Suche in einer Datenbank, in der Fingerabdrücke von Referenz-Informationsentitäten gespeichert sind, durchzuführen, und
um eine Anzahl von Identifikationsergebnissen sowie ein Abstandsmaß für jedes Identifikationsergebnis als Hinweis auf ein Zuverlässigkeitsmaß für jedes Identifikationsergebnis zu liefern.

14. Vorrichtung nach Anspruch 13, bei der die Einrichtung (12) zum Bereitstellen ausgebildet ist, um für jedes Identifikationsergebnis, für das nicht bereits eine Hypothese existiert, eine neue Hypothese zu beginnen, wenn ein Abstandsmaß für das Identifikationsergebnis eine Beziehung zu einer Schwelle hat, die auf einen kleineren Abstand als einen Schwellenabstand hinweist.

15. Vorrichtung nach einem der vorhergehenden Ansprüche, bei der die Einrichtung (16) zum Untersuchen ausgebildet ist, um ansprechend auf eine Bestimmung alle Hypothesen für die aufeinanderfolgenden Fingerabdrücke zu beenden, die für die Fingerabdrücke gebildet worden sind, die von der wahrscheinlichsten Hypothese erfaßt sind.

16. Vorrichtung nach einem der vorhergehenden Ansprüche, bei der das Informationssignal ein Audiosignal umfaßt, bei der die Informationseinheit Audioabtastwerte im Zeit- oder Frequenzbereich sind, und bei der eine Informationsentität ein Musikstück, eine gesprochene Sequenz oder einen Geräuschabschnitt umfaßt.

17. Vorrichtung nach einem der vorhergehenden Ansprüche, bei der ein Fingerabdruck für einen Block durch eine Zeit-Frequenz-Umsetzung und/oder durch Berechnung eines spektralen Flachheitsmaßes für ein Ergebnis der Zeit-Frequenz-Umsetzung ermittelt wird.

18. Vorrichtung nach einem der vorhergehenden Ansprüche, bei der ein Fingerabdruck für einen Block so erzeugt wird, daß der Fingerabdruck eine Datenmenge hat, die kleiner ist als eine Datenmenge des Blocks.

19. Vorrichtung nach einem der vorhergehenden Ansprüche,
bei der die Einrichtung (12) zum Bereitstellen von Identifikationsergebnissen ausgebildet ist, um neben einem Identifikationsergebnis auch einen neuen Zeitindex für das Identifikationsergebnis zu liefern, und
bei der die Einrichtung (14) zum Bilden von Hypothesen ausgebildet ist, um eine Hypothese weiterzuführen, wenn eine Kontinuität zwischen einem aktuellsten Zeitindex in der Hypothese und dem neuen Zeitindex existiert, oder um eine Hypothese zu starten, wenn die Kontinuität nicht existiert.

20. Verfahren zum Analysieren eines Informationssignals, das eine Folge (802) von Blöcken von Informationseinheiten (804) aufweist, wobei eine Mehrzahl von aufeinanderfolgenden Blöcken der Folge von Blöcken eine Informationsentität (806) darstellt, unter Verwendung einer Folge von Fingerabdrücken (FAi) für die Folge von Blöcken, so daß die Folge von Blöcken durch die Folge von Fingerabdrücken dargestellt ist, mit folgenden Schritten:

Bereitstellen (12) von Identifikationsergebnissen (IDi) für aufeinanderfolgende Fingerabdrücke, wobei ein Identifikationsergebnis eine Zugehörigkeit eines Blocks von Informationseinheiten zu einer vorbestimmten Informationsentität darstellt, und wobei es für jedes Identifikationsergebnis ein Zuverlässigkeitsmaß gibt, wobei im Schritt des Bereitstellens für einen ersten Fingerabdruck ein erstes Identifikationsergebnis und für einen folgenden Block ein zweites Identifikationsergebnis erzeugt werden, das sich von dem ersten Identifikationsergebnis unterscheidet;
Bilden (14) von wenigstens zwei Hypothesen aus den Identifikationsergebnissen für die aufeinanderfolgenden Fingerabdrücke, wobei eine erste Hypothese eine Annahme für die Zugehörigkeit der Folge von Blöcken zu einer ersten Informationsentität ist, und wobei die zweite Hypothese eine Annahme für eine Zugehörigkeit der Folge von Blöcken zu einer zweiten Informationsentität ist, wobei der Schritt des Bildens folgende Schritte aufweist:

ansprechend auf das erste Identifikationsergebnis, Beginnen der ersten Hypothese oder Weiterführen der bereits bestehenden ersten Hypothese, und, ansprechend auf das zweite Identifikationsergebnis, Beginnen der zweiten Hypothese oder Weiterführen der bereits bestehenden zweiten Hypothese;

Untersuchen (16) der wenigstens zwei Hypothesen durch Zusammenfassen der Zuverlässigkeitsmaße der Hypothesen, um ein Untersuchungsergebnis (18) zu erhalten; und
Treffen (20) einer Aussage über das Informationssignal basierend auf dem Untersuchungsergebnis.

21. Computerprogramm mit einem Programmcode angepasst um ein Verfahren gemäß Patentanspruch 20 durch zuführen, wenn das Programm auf einem Computer abläuft.

## Claims

1. Device for analyzing an information signal having a sequence (802) of blocks of information units (804), wherein a plurality of consecutive blocks of the sequence of blocks represents an information entity (806), using a sequence of fingerprints (FAi) for the sequence of blocks so that the sequence of blocks is represented by the sequence of fingerprints, comprising:

means (12) for providing identification results (IDi) for consecutive fingerprints, wherein an identification result represents an association of a block of information units with a predetermined information entity, and wherein there is a reliability measure for each identification result, wherein the means (12) for providing is designed to generate a first identification result for a first fingerprint, and to generate a second identification result differing from the first identification result for a following block;
means (14) for forming at least two hypotheses from the identification results for the consecutive fingerprints, wherein a first hypothesis is an assumption for the association of the sequence of blocks with a first information entity, and wherein a second hypothesis is an assumption for the association of the sequence of blocks with a second information entity, wherein the means (14) for forming is designed to start the first hypothesis or continue the already existing first hypothesis in response to the first identification result and to start the second hypothesis or to continue the already existing second hypothesis in response to the second identification result;
means (16) for examining the at least two hypotheses by combining the reliability measures of the hypotheses to obtain an examination result (18); and
means (20) for making a statement on the information signal based on the examination result.

2. Device of claim 1, wherein the means (16) for examining is designed to examine the hypotheses with respect to probability information applying to the hypotheses.

3. Device of claim 1 or 2, wherein the means (20) for making a statement is designed to determine that the sequence of blocks represents an information entity having a hypothesis that is most likely, or that an information entity ends with the fingerprint that contributes to the most likely hypothesis as the last one in time, or that an information entity is present in the information signal or not.

4. Device of one of the preceding claims, wherein the means (12) for providing is designed to generate two different identification results for a fingerprint.

5. Device of claim 4, wherein the means (12) for providing is designed to generate a reliability measure for each one of the two different identification results.

6. Device of claim 4 or 5, wherein the means (14) for forming is designed to associate a first one of the two identification results with the first hypothesis and to associate a second one of the two identification results with the second hypothesis.

7. Device of one of claims 3 to 6, wherein the means (16) for examining is designed to determine the hypothesis that has a higher combined reliability measure.

8. Device of one of the preceding claims, wherein the means (14) for forming is designed to end the first, or second hypotheses when a predetermined number of blocks will neither obtain an identification result indicating the first information entity nor an identification result indicating the second information entity.

9. Device of one of the preceding claims, wherein the means (14) for forming is designed to end the first or second hypotheses when a detected event occurs in the information signal.

10. Device of claim 9, wherein there is an event detector, which is designed to detect an energy level in a block of information units that is below a threshold level as the event.

11. Device of one of the preceding claims, wherein the means (12) for providing is designed to output only the most reliable identification result without or with reliability measure for each fingerprint, to output a predetermined number of most reliable fingerprints, each with or without reliability measure, for a fingerprint, or to output only the identification results having a reliability measure above a threshold with or without reliability measures for a fingerprint.

12. Device of one of the preceding claims, wherein the means (16) for examining is designed to add explicit or implicit reliability measures belonging to a hypothesis to obtain a combined reliability measure.

13. Device of one of the preceding claims, wherein the means (12) for providing is designed
to perform a search in a database, in which fingerprints of reference information entities are stored, with a fingerprint, and
to provide a number of identification results and a distance measure for each identification result as indication of a reliability measure for each identification result.

14. Device of claim 13, wherein the means (12) for providing is designed to start a new hypothesis for each identification result for which there is no hypothesis yet, when a distance measure for the identification result has a relationship to a threshold indicating a smaller distance than a threshold distance.

15. Device of one of the preceding claims, wherein the means (16) for examining is designed to end, in response to a determination, all hypotheses for the consecutive fingerprints that have been formed for the fingerprints that are covered by the most likely hypothesis.

16. Device of one of the preceding claims, wherein the information signal includes an audio signal, wherein the information unit are audio samples in the time or frequency domain, and wherein an information entity includes a piece of music, a spoken sequence or a noise portion.

17. Device of one of the preceding claims, wherein a fingerprint for a block is determined by a time/frequency conversion and/or by calculation of a spectral flatness measure for a result of the time/frequency conversion.

18. Device of one of the preceding claims, wherein a fingerprint for a block is generated so that the fingerprint has an amount of data that is smaller than an amount of data of the block.

19. Device of one of the preceding claims,

wherein the means (12) for providing identification results is designed to provide, in addition to an identification result, also a new time index for the identification result, and

wherein the means (14) for forming hypotheses is designed to continue a hypothesis if there is a continuity between a most current time index in the hypothesis and the new time index, or to start a hypothesis if there is no continuity.

20. Method for analyzing an information signal having a sequence (802) of blocks of information units (804), wherein a plurality of consecutive blocks of the sequence of blocks represents an information entity (806), using a sequence of fingerprints (FAi) for the sequence of blocks so that the sequence of blocks is represented by the sequence of fingerprints, comprising:

providing (12) identification results (IDi) for consecutive fingerprints, wherein an identification result represents an association of a block of information units with a predetermined information entity, and wherein there is a reliability measure for each identification result, wherein, in the step of providing, a first identification result is generated for a first fingerprint and a second identification result differing from the first identification result is generated for a following block; forming (14) at least two hypotheses from the identification results for the consecutive fingerprints, wherein a first hypothesis is an assumption for the association of the sequence of blocks with a first information entity, and wherein the second hypothesis is an assumption for an association of the sequence of blocks with a second information entity, wherein the step of forming comprises:

starting the first hypothesis or continuing the already existing first hypothesis in response to the first identification result, and starting the second hypothesis or continuing the already existing second hypothesis in response to the second identification result;

examining (16) the at least two hypotheses by combining the reliability measures of the hypotheses to obtain an examination result (18); and making (20) a statement on the information signal based on the examination result.

21. Computer program having a program code adapted to perform a method according to claim 20 when the program runs on a computer.

## Revendications

1. Dispositif pour analyser un signal d'information qui présente une succession (802) de blocs d'unités d'information (804), une pluralité de blocs successifs de la succession de blocs représentant une entité d'information (806), à l'aide d'une succession d'empreintes digitales (FAi) pour la succession de blocs, de sorte que la succession de blocs soit représentée par la succession d'empreintes digitales, aux caractéristiques suivantes:

un moyen (12) destiné à mettre à disposition des résultats d'identification (IDi) pour des empreintes digitales successives, un résultat d'identification représentant une appartenance d'un bloc d'unités d'information à une entité d'information prédéterminée, et pour chaque résultat d'identification existant une mesure de fiabilité, le moyen (12) destiné à mettre à disposition étant réalisé de manière à générer pour une première empreinte digitale un premier résultat d'identification, et à générer pour un bloc suivant un deuxième résultat d'identification qui diffère du premier résultat d'identification;
un moyen (14) destiné à former au moins deux hypothèses à partir des résultats d'identification pour les empreintes digitales successives, une première hypothèse étant une supposition de l'appartenance de la succession de blocs à une première entité d'information, et une deuxième hypothèse étant une supposition de l'appartenance de la succession de blocs à une deuxième entité d'information, le moyen (14) destiné à former étant réalisé de manière à commencer, en réaction au premier résultat d'identification, la première hypothèse ou à poursuivre la première hypothèse déjà existante et à commencer, en réaction au deuxième résultat d'identification, la deuxième hypothèse ou à poursuivre la deuxième hypothèse déjà existante;
un moyen (16) destiné à examiner les au moins deux hypothèses en regroupant les mesures de fiabilité des hypothèses, pour obtenir un résultat d'examen (18); et
un moyen (20) destiné à se prononcer sur le signal d'information sur base du résultat d'examen.

2. Dispositif selon la revendication 1, dans lequel le moyen (16) destiné à examiner est réalisé de manière à examiner les hypothèses en ce qui concerne les informations de probabilité valables pour les hypothèses.

3. Dispositif selon la revendication 1 ou 2, dans lequel le moyen (20) destiné à se prononcer est réalisé de manière à déterminer que la succession de blocs représente une entité d'information qui a une hypothèse qui est la plus probable, ou qu'une entité d'information est terminée par l'empreinte digitale qui contribue en dernier lieu dans le temps à l'hypothèse la plus probable, ou qu'une entité d'information est présente ou non dans le signal d'information.

**4.** Dispositif selon l'une des revendications précédentes, dans lequel le moyen (12) destiné à mettre à disposition est réalisé de manière à générer pour une empreinte digitale deux résultats d'identification différents.

**5.** Dispositif selon la revendication 4, dans lequel le moyen (12) destiné à mettre à disposition est réalisé de manière à générer une mesure de fiabilité pour chacun des deux résultats d'identification différents.

**6.** Dispositif selon la revendication 4 ou 5, dans lequel le moyen (14) destiné à former est réalisé de manière à associer à la première hypothèse un premier des deux résultats d'identification et à la deuxième hypothèse un deuxième des deux résultats d'identification.

**7.** Dispositif selon l'une des revendications 3 à 6, dans lequel le moyen (16) destiné à examiner est réalisé de manière à déterminer l'hypothèse qui a une mesure de fiabilité regroupée plus élevée.

**8.** Dispositif selon l'une des revendications précédentes, dans lequel le moyen (14) destiné à former est réalisé de manière à terminer la première ou la deuxième hypothèse lorsqu'il n'est obtenu pour un nombre prédéterminé de blocs ni un résultat d'identification indiquant la première entité d'information, ni un résultat d'identification indiquant la deuxième entité d'information.

**9.** Dispositif selon l'une des revendications précédentes, dans lequel le moyen (14) destiné à former est réalisé de manière à terminer la première ou la deuxième hypothèse lorsqu'il se présente un événement détecté dans le signal d'information.

**10.** Dispositif selon la revendication 9, dans lequel est présent un détecteur d'événement qui est réalisé de manière à détecter comme événement un niveau d'énergie dans un bloc d'unités d'information qui est inférieur à un niveau de seuil.

**11.** Dispositif selon l'une des revendications précédentes, dans lequel le moyen (12) destiné à mettre à disposition est réalisé de manière à sortir pour chaque empreinte digitale uniquement le résultat d'identification le plus fiable sans ou avec mesure de fiabilité, à sortir pour une empreinte digitale un nombre prédéterminé d'empreintes digitales les plus fiables chaque fois avec ou sans mesure de fiabilité, ou à sortir pour une empreinte digitale uniquement le résultat d'identification avec ou sans mesures de fiabilité qui ont une mesure de fiabilité au-dessus d'un seuil.

**12.** Dispositif selon l'une des revendications précédentes, dans lequel le moyen (16) destiné à examiner est réalisé de manière à additionner des mesures de fiabilité explicites ou implicites appartenant à une hypothèse, pour obtenir une mesure de fiabilité regroupée.

**13.** Dispositif selon l'une des revendications précédentes, dans lequel le moyen (12) destiné à mettre à disposition est réalisé de manière à effectuer avec une empreinte digitale une recherche dans une banque de données dans laquelle sont mémorisées des empreintes digitales d'entités d'information de référence, et
à fournir un nombre de résultats d'identification ainsi qu'une mesure de distance pour chaque résultat d'identification comme indication d'une mesure de fiabilité pour chaque résultat d'identification.

**14.** Dispositif selon la revendication 13, dans lequel le moyen (12) destiné à mettre à disposition est réalisé de manière à commencer, pour chaque résultat d'identification pour lequel il n'existe pas déjà une hypothèse, une nouvelle hypothèse lorsqu'une mesure de distance pour le résultat d'identification a un rapport avec un seuil qui indique une distance inférieure à une distance-seuil.

**15.** Dispositif selon l'une des revendications précédentes, dans lequel le moyen (16) destiné à examiner est réalisé de manière à terminer, en réaction à une déterminer, toutes les hypothèses pour les empreintes digitales successives qui ont été formées pour les empreintes digitales qui sont incluses dans l'hypothèse la plus probable.

**16.** Dispositif selon l'une des revendications précédentes, dans lequel le signal d'information comprend un signal audio, dans lequel l'unité d'information est des valeurs de balayage audio dans le domaine du temps ou de la fréquence, et dans lequel une entité d'information comprend un morceau de musique, une séquence parlée ou un segment de bruit.

**17.** Dispositif selon l'une des revendications précédentes, dans lequel une empreinte digitale pour un bloc est déterminée par une conversion temps-fréquence et/ou par calcul d'une mesure de planéité spectrale pour un événement de la conversion temps-fréquence.

**18.** Dispositif selon l'une des revendications précédentes, dans lequel une empreinte digitale pour un bloc est générée de sorte que l'empreinte digitale ait une quantité de données qui est inférieure à une quantité de données du bloc.

19. Dispositif selon l'une des revendications précédentes,

dans lequel le moyen (12) destiné à mettre à disposition des résultats d'identification est réalisé de manière à fournir, outre un résultat d'identification, également un nouvel indice temporel pour le résultat d'identification, et

dans lequel le moyen (14) destiné à former des hypothèses est réalisé de manière à poursuivre une hypothèse lorsqu'il existe une continuité entre un indice temporel le plus actuel dans l'hypothèse et le nouvel indice temporel, ou à commencer une hypothèse lorsque la continuité n'existe pas.

20. Procédé pour analyser un signal d'information qui présente une succession (802) de blocs d'unités d'information (804), une pluralité de blocs successifs de la succession de blocs représentant une entité d'information (806), à l'aide d'une succession d'empreintes digitales (FAi) pour la succession de blocs, de sorte que la succession de blocs soit représentée par la succession d'empreintes digitales, aux étapes suivantes consistant à:

mettre à disposition (12) des résultats d'identification (IDi) pour des empreintes digitales successives, un résultat d'identification représentant une appartenance d'un bloc d'unités d'information à une entité d'information prédéterminée, et pour chaque résultat d'identification existant une mesure de fiabilité, à l'étape de mise à disposition étant généré pour une première empreinte digitale un premier résultat d'identification et pour un bloc suivant un deuxième résultat d'identification qui diffère du premier résultat d'identification;

former (14) au moins deux hypothèses à partir des résultats d'identification pour les empreintes digitales successives, une première hypothèse étant une supposition de l'appartenance de la succession de blocs à une première entité d'information, et la deuxième hypothèse étant une supposition de l'appartenance de la succession de blocs à une deuxième entité d'information, l'étape de formation présentant les étapes suivantes consistant à:

commencer, en réaction au premier résultat d'identification, la première hypothèse ou poursuivre la première hypothèse déjà existante et commencer, en réaction au deuxième résultat d'identification, la deuxième hypothèse ou poursuivre la deuxième hypothèse déjà existante;
examiner (16) les au moins deux hypothèses en regroupant les mesures de fiabilité des hypothèses, pour obtenir un résultat d'examen (18); et
se prononcer (20) sur le signal d'information sur base du résultat d'examen.

21. Programme d'ordinateur avec un code de programme adapté pour réaliser un procédé selon la revendication 20 lorsque le programme est exécuté sur un ordinateur.

FOLGE VON FINGERABDRÜCKEN, DIE
EINE FOLGE VON BLÖCKEN DES
INFORMATIONSSIGNALS DARSTELLT

10

EINRICHTUNG ZUM BEREITSTELLEN
VON IDENTIFIKATIONSERGEBNISSEN FÜR
AUFEINANDER FOLGENDE
FINGERABDRÜCKE

12

. . .

FÜR EINEN FINGERABDRUCK:
MEHRERE ID-ERGEBNISSE
MIT ZUV.-MASS ODER ZUVERLÄSS.
ID-ERGEBNIS

EINRICHTUNG ZUM BILDEN VON
WENIGSTENS ZWEI HYPOTHESEN

14

H1          H2

. . .

HYPOTHESE ERSTRECKT
SICH ÜBER MEHRERE
FINGERABDRÜCKE

EINRICHTUNG ZUM UNTERSUCHEN
DER HYPOTHESEN

16

$ZV_i$

18          UNTERSUCHUNGSERGEBNIS

EINRICHTUNG ZUM TREFFEN EINER
AUSSAGE ÜBER DAS INFORMATIONS-
SIGNAL

20

FIG. 1

DATENBANK

FINGERABDRÜCKE AUS MUSIKSTÜCK

| | |
|---|---|
| $FA_{r11}, FA_{r12}, FA_{r13}, \ldots$ | ID1 |
| $FA_{r21}, FA_{r22}, FA_{r23}, \ldots$ | ID2 |
| $FA_{r31}, FA_{r32}, FA_{r33}, \ldots$ | ID3 |
| $\vdots$ | $\vdots$ |
| $FA_{r108\ 1}, \ldots$ | ID108 |
| $FA_{r109\ 1}, \ldots$ | ID109 |

22

FAi

24

LONG VERSION

SHORT VERSION
(DES GLEICHEN
STÜCKS)

26

| | | |
|---|---|---|
| $ID_x$ | $ZV_1$ | (60%) |
| $ID_y$ | $ZV_2$ | (50%) |
| $ID_z$ | $ZV_3$ | (40%) |

28

$ZV_n$:ZUVERLÄSSIGHEITSMASS

FIG. 2

| | $\Delta t_1$ | | $\Delta t_2$ | | $\Delta t_3$ | | $\Delta t_4$ | | $\Delta t_5$ | | $\Delta t_6$ | | $\Delta t_7$ | | $\Delta t_8$ | |
|---|---|---|---|---|---|---|---|---|---|---|---|---|---|---|---|---|
| | FA1 | | FA2 | | FA3 | | FA4 | | FA5 | | FA6 | | FA7 | | FA8 | |
| | ID1 | 40% | ID1 | 60 | ID1 | 80 | ID1 | 60 | ID1 | 90 | ID1 | 90 | ID 108 | 90 | ID 108 | 80 |
| | ID2 | 60 | ID2 | 70 | ID2 | 30 | ID2 | 40 | ID2 | 20 | ID2 | 10 | ID 109 | 85 | ID 109 | 70 |
| | ID3 | 30 | ID3 | 20 | ID3 | 30 | ID3 | 40 | ID3 | 10 | ID3 | 5 | ID 4 | 10 | ID 4 | 10 |
| H1 | ID1 | | ID1 | | ID1 | | ID1 | | ID1 | | ID1 | | ID108 | | ID108 | |
| H2 | ID2 | | ID2 | | ID2 | | ID2 | | ID2 | | ID2 | | ID109 | | ID109 | |
| H3 | ID3 | | ID3 | | ID3 | | ID3 | | ID3 | | ID3 | | ID4 | | ID4 | |
| H4 | | | | | | | | | | | | | | | ID8 | |

**FÜR $\Delta t_1$-$\Delta t_6$**

$\Sigma$ ID1: 420

$\Sigma$ ID2: 230

$\Sigma$ ID3: 135

MUSIKSTÜCK-
ÜBERGANG

⟹ AUSSAGE:-INFORMATIONSENTITÄT VON $\Delta t_1$-$\Delta t_6$ IST
MUSIKSTÜCK ID1; H1 WAR RICHTIG; UND/ODER
-$\Delta t_6$ IST ENDE DER 1. INFORMATIONSENTITÄT
BZW. $\Delta t_7$ IST BEGINN DER 2. INFORMATIONS-
ENTITÄT; UND/ODER
-ID1 IST IN INFORMATIONSSIGNAL ENTHALTEN

## FIG. 3

ID 108 IST EINE LANGE VERSION EINES MUSIKSTÜCKES XY (LÄNGE Z.B. 7:32, SYMBOLISCH DURCH FOLGENDEN FINGERPRINT DARGESTELLT:

| ID 108 |
|--------|

## FIG. 4A

ID109 IST EINE KURZVERSION DES GLEICHEN MUSIKSTÜCKES XY (Z.B. EINE SOG. "RADIO-VERSION" ODER "RADIO-EDIT", LÄNGE Z.B. 4:38), SYMBOLISCH DURCH FOLGENDEN FINGERPRINT DARGESTELLT:

| ID 109 |
|--------|

## FIG. 4B

| ID 108 | ID 109 | ID 108 |
|--------|--------|--------|

$t_0$  $\Delta t_0$  $t_1$  $\Delta t_1$  $t_2$  $\Delta t_2$  $t_3$  $\Delta t_3$  $t_4$  $\Delta t_4$  $t_5$  $\Delta t_5$  $t_6$  $\Delta t_6$  $t_7$   ZEIT t

## FIG. 4C

IDENTIFIZIERTE ELEMENTE FÜR DIE ZEITABSCHNITTE $\Delta t_x$ (MIT x=0,1,2,3,4,5,6)

| ID 108 | ID 109 | ID 108 | ID 109 | ID 109 | ID 108 | ID 108 |
|--------|--------|--------|--------|--------|--------|--------|

$\Delta t_0$    $\Delta t_1$    $\Delta t_2$    $\Delta t_3$    $\Delta t_4$    $\Delta t_5$    $\Delta t_6$

## FIG. 5A

ZUSAMMENFASSUNG IM ERKENNUNGSPROTOKOLL:

1. $t_0$ BIS $t_1$: ID 108    ($\Delta t_0$)
2. $t_1$ BIS $t_2$: ID 109    ($\Delta t_1$)
3. $t_2$ BIS $t_3$: ID 108    ($\Delta t_2$)
4. $t_3$ BIS $t_5$: ID 109    ($\Delta t_3, \Delta t_4$)
5. $t_5$ BIS $t_7$: ID 108    ($\Delta t_5, \Delta t_6$)

## FIG. 5B

IDENTIFIZIERTE ELEMENTE FÜR DIE ZEITABSCHNITTE $\Delta t_x$ (MIT x=0,1,2,3,4,5,6)

| ID 108 | ID 109 | ID 109 | ID 109 | ID 109 | ID 108 | ID 108 |
|--------|--------|--------|--------|--------|--------|--------|

## FIG. 5C

ZUSAMMENFASSUNG IM ERKENNUNGSPROTOKOLL:

1. $t_0$ BIS $t_1$: ID 108 ($\Delta t_0$)
2. $t_1$ BIS $t_5$: ID 109 ($\Delta t_1 - \Delta t_4$)
3. $t_5$ BIS $t_7$: ID 108 ($\Delta t_5 - \Delta t_6$)

## FIG. 5D

900

904

AUDIO
EINGANG → MERKMALS-EXTRAKTION → VERGLEICH ← FINGER-PRINT DATEN-BANK

902

ERKENNUNGSRESULTAT FÜR
ZEITABSCHNITT $\Delta t_x$

POSTPROCESSING ~14,16

~18

ERKENNUNGSABFOLGE/
-PROTOKOLL ~20

## FIG 6

ZEIT t

$t_0$ $\Delta t_0$ $t_1$ $\Delta t_1$ $t_2$ $\Delta t_2$ $t_3$ $\Delta t_3$ $t_4$ $\Delta t_4$ $t_5$ $\Delta t_5$ $t_6$ $\Delta t_6$ $t_7$

| H1: | ID 108 | ID 108 | ID 108 | ID 108 | ID 108 | ID 108 | ID 108 |
| H2: | | ID 109 | ID 109 | ID 109 | ID 109 | | |

## FIG 7A

HYPOTHESE 1 (H1): $t_0$ BIS $t_7$: ID 108, KONFIDENZMASS $x_{H1}$%
HYPOTHESE 2 (H2): $t_1$ BIS $t_5$: ID 109, KONFIDENZMASS $x_{H2}$%
MIT $x_{H1}$% > $x_{H2}$%, WOBEI $x_{H1}$% UND $x_{H2}$% JE EINE FUNKTION DER
KONFIDENZMASSE DER EINZELERKENNUNGEN SIND.

## FIG 7B

DIES BEDEUTET FÜR DAS ERKENNUNGSPROTOKOLL:

1. $t_0$ BIS $t_7$: ID 108 ($\Delta t_0$-$\Delta t_6$)

## FIG 7C

## FIG. 8

1. INF.-ENTITÄT     2. INF.-ENTITÄT    ...

BLOCK

802   FA1 FA2 FA3 FA4 FA5 FA6 FA7 ...

800

FAi: FINGERABDRUCK FÜR BLOCK i

INFORMATIONSEINHEIT 804
(AUDIO-ABTASTWERT IM ZEITBEREICH ODER
IM FREQUENZBEREICH)

INFORMATIONSSIGNAL

**FIG. 8**

AUDIO EINGANG → MERKMALS-EXTRAKTION 900 → FINGER-PRINT DATEN-BANK 902

**FIG. 9**

AUDIO EINGANG → MERKMALS-EXTRAKTION 900 → VERGLEICH 904 ← FINGER-PRINT DATEN-BANK 902

ERKENNUNGSRESULTAT FÜR ZEITABSCHNITT Δt

**FIG. 10**

24

**EP 1 745 464 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 0211123 A2

- WO 03007185 A

### In der Beschreibung aufgeführte Nicht-Patentliteratur

- **BATLLE E et al.** Automatic Song Identification in Noisy Broadcast Audio. *PROCEEDINGS OF THE FOURTH IASTED INTERNATIONAL CONFERENCE SIGNAL AND IMAGE PROCESSING ACTA PRESS ANAHEIM,* 2002, 230-235